(19) Europäisches Patentamt European Patent Office Office européen des brevets

(11) **EP 4 078 484 B1**

(12) **EUROPEAN PATENT SPECIFICATION**

(45) Date of publication and mention
of the grant of the patent:
**01.04.2026 Bulletin 2026/14**

(21) Application number: **20817281.7**

(22) Date of filing: **01.12.2020**

(51) International Patent Classification (IPC):
*G06Q 10/06* (2023.01)

(52) Cooperative Patent Classification (CPC):
**G06Q 10/06**

(86) International application number:
**PCT/EP2020/084062**

(87) International publication number:
**WO 2021/121955 (24.06.2021 Gazette 2021/25)**

(54) **METHOD OF OPERATING AND CALIBRATING A GROUP OF MEASUREMENT DEVICES**

VERFAHREN ZUM BETRIEB UND ZUR KALIBRIERUNG EINER GRUPPE VON MESSGERÄTEN

PROCÉDÉ DE FONCTIONNEMENT ET D'ÉTALONNAGE D'UN GROUPE DE DISPOSITIFS DE MESURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.12.2019 DE 102019134797**

(43) Date of publication of application:
**26.10.2022 Bulletin 2022/43**

(73) Proprietor: **Endress+Hauser Group Services AG**
**4153 Reinach (CH)**

(72) Inventors:
• **VAISSIERE, Dimitri**
**68170 Rixheim (FR)**
• **HÖFFLIN, Pia**
**79539 Lörrach (DE)**
• **DREYER, Gary**
**79576 Weil am Rhein (DE)**

(74) Representative: **Endress + Hauser Group Services**
**(Deutschland) AG+Co. KG**
**Colmarer Straße 6**
**79576 Weil am Rhein (DE)**

(56) References cited:
**EP-B1- 2 602 680**

• **H. T. CASTRUP ET AL: "Metrology - Calibration and Measurement Processes Guidelines", 30 June 1994 (1994-06-30), Passadena, California, USA, XP055080803, Retrieved from the Internet <URL:http://www.hq.nasa.gov/office/codeq/doctree/NASA_RP1342.pdf> [retrieved on 20130924]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention concerns a method of operating a group of one or more devices on an operating site and of calibrating said devices, wherein: each device is a measurement device and calibrations of said devices are executed based on time schedules determined based on calibration time intervals determined for each of the devices.

Measurement devices are used in nearly all branches of industry. They are commonly used to measure and/or monitor measurement variables, such as e.g. physical quantities related to ongoing production processes or properties of a medium or product. Measurement results provided by measurement devices are e.g. used in process automation for monitoring, controlling and/or regulating a process performed at the operating site. Thus, measurement devices play a vital part in industry as well as in laboratories and non-compliancy of a device to a requirement specified for it, e.g. a specified measurement accuracy, may have severe consequences ranging from impaired production processes, the production of faulty products to potential hazards to people and/or the environment.

To ensure, that measurement devices fulfill the requirements specified for them, they are regularly calibrated. Calibrations are preferably performed on specially designed calibration sites capable of providing reference values of the measurement variable measured by the device with very high accuracy. A typical calibration procedure foresees the determination of a measurement error of the device based on a measured value of the measurement variable determined by the field device and the corresponding reference value provided. In case the measurement error exceeds a maximum permissible error, the device is considered not to conform. As a consequence, adjustments of the measurement indications, repair or replacement of the device is required. If the measurement error does not exceed the maximum permissible error conformity of the field device is declared and generally no further actions are taken.

Calibrations are usually performed periodically after fixed calibration time intervals. As an example, fixed calibration time intervals recommended by the manufacturer of the device can be applied. These intervals are identical for all devices of the same type, regardless of the measurement conditions individual devices may be exposed to during operation. For safety reasons, they are typically set so short, that statistically most devices, e.g. well above 90%, can be expected to be in full compliance at the end of their calibration time interval. Short calibration time intervals increase the costs involved in operating these devices. On the other hand, longer calibration time intervals increase the risk of operating a non-compliant device. In this context, the article "Calibration Intervals, A Manufacturer's Perspective" by David Deaver, Fluke Corporation, published electronically on December 11, 2012 describes a method of determining fixed calibration time intervals based on a compromise between the calibration costs as well as the risk involved in operating non-compliant devices.

As an alternative to fixed calibration time intervals it is known in the art to apply individually determined calibration time intervals, wherein each next calibration time interval is determined for each device individually based on the measurement properties of the respective device determined during the present calibration. A corresponding method is e.g. described in EP 2 602 680 B1. These methods take into account, that devices found to be only just compliant during calibration can be expected to become non-compliant much sooner than devices, that were found to be fully compliant. Thus, shorter calibration time intervals are applied to compliant devices exhibiting a lower degree of compliancy to reduce the risk that these devices may become non-compliant during operation prior to their next calibration, and longer calibration time intervals are applied to compliant devices exhibiting a higher degree of compliancy to reduce the calibration cost.

Since the measurement properties of measurement devices are usually determined during each calibration anyway, individually determined calibration time intervals can be determined at very little extra cost. Scheduling and performing calibrations of measurement devices based on individually determined calibration time intervals does however involve a complex logistic and may cause extra costs and inconveniences. One reason for this is, that it is no longer possible to synchronize calibrations of several devices of the same type to be performed simultaneously. This is especially disadvantageous in applications, where a whole section of a production site has to be shut down, each time one of the devices operating on that section has to be calibrated. This can lead to a significant amount of additional costs in surplus to the costs involved in the performance of the calibrations.

It is an object of the invention to provide a method of operating a group of one or more measurement devices on an operating site and of calibrating said devices which allows to further optimize the calibration time intervals with respect to the risk and the cost involved.

This object is achieved by a method of operating a group of one or more devices on an operating site and of calibrating said devices, wherein: each device is a measurement device and calibrations of said devices are executed based on time schedules determined based on calibration time intervals determined for each of the devices, said method comprising the steps of:

> a) during each calibration of each device: determining a degree of compliancy of the respective device to a requirement specified for this device, based on said degree of compliancy determining a recommended interval for the next calibration of the respective device and determining a ratio of the recommended interval and the calibration time interval currently applied to this device,

b) reviewing the calibration time intervals based on said ratios and a predetermined set of ratio ranges by: for each device performing a procedure predetermined for the ratio range comprising ratios of the size of the ratio determined for the respective device or a replacement device replacing the device and updating the calibration time interval currently applied to the respective device based on at least one of: a rule defined for the respective ratio range and a rule applicable to the respective device, and

c) determining the time schedule providing scheduled calibrations times at which the devices shall be calibrated again based on the updated calibration time intervals determined for each of the devices and performing the next calibrations of the devices according to the scheduled calibration times.

This method has the advantage, that reviewing and updating of the calibration time intervals is performed based on the degree of compliancy individually determined for each of the devices. This allows for the method to profit from the cost reduction potential as well as the risk reduction potential available based on the individually determined recommended intervals. At the same it allows for the procedures predetermined for each of the ratio ranges and the rules applied to determine the updated calibration time intervals to be tailored to the needs, requirements and circumstances prevailing at the operating site. Thus, the flexibility given with respect to the calibration time intervals of devices having a higher degree of compliancy can be used in a way that best suits the operating site, as well as to synchronize calibrations. Also, devices having a lower degree of compliancy are identified and can be treated accordingly to reduce the risk.

Performing the review and the update based on the small number of predefined ratio ranges has the advantage, that the same procedure is applied to all devices falling into the same ratio range. This simplifies the logistics required and facilitates and accelerates the performance of the method.

A first refinement comprises a method, wherein the set of ratio ranges comprises:

a lower ratio range comprising ratios ranging from zero to an upper limit of the lower range smaller than 1 or smaller or equal to 0.75,

an intermediate range comprising ratios, wherein the recommended interval and the currently applied calibration time interval are of the same order of magnitude, or comprising ratios ranging from the upper limit of the lower range to an upper limit of the intermediate range larger than 1, smaller or equal to 1,25 or smaller or equal to 2, and

a higher ratio range comprising ratios, wherein the recommended interval is larger or significantly larger than the currently applied calibration time interval, or comprising all ratios exceeding a given threshold or a threshold given by the upper limit of the intermediate ratio range.

A refinement of the first refinement comprises a method, wherein: the procedure performed with respect to all devices exhibiting ratios comprised in the lower ratio range comprises: a first procedure step of performing at least one of: adjusting, servicing and repairing the device, a second procedure step of re-calibrating the device, re-determining the recommended interval and re-determining the ratio based on the re-determined recommended interval, and a third procedure step of determining the updated calibration time interval for the respective device or a replacement device replacing the device.

A refinement of the last mentioned refinement comprises a method, wherein: the procedure performed with respect to all devices exhibiting ratios comprised in the lower ratio range further comprises at least one of the procedure steps of:

a) performing the first, the second and the third procedure step only with respect to devices exhibiting a ratio exceeding a predefined threshold and replacing devices exhibiting a ratio smaller than this threshold,

b) replacing the respective device in case the re-determined ratio belongs to the same ratio range as the previously determined ratio,

c) determining the updated calibration time interval for the respective device based on the rule applicable to the respective device or by determining a product of the re-determined recommended interval and a predefined constant and determining the updated calibration time interval to be equal to an interval shorter than the product and longer than a minimum interval defined for the device, and

d) determining the updated calibration time interval for the respective replacement device based on a recommendation of a manufacturer of the replacement device.

A second refinement comprises a method, wherein:

the procedure performed with respect to all devices exhibiting ratios comprised in the intermediate ratio range comprises at least one of the steps of:

a) determining the updated calibration time interval: a1) based on at least one of: the recommended interval and the currently applied calibration time interval, a2) to be equal to the currently applied calibration time interval, to be equal to the recommended interval or to be equal to the longer or the shorter of the currently applied calibration time interval and the recommended interval, a3) based on a rule taking into account at least one requirement, restriction or circumstance prevailing at the operating site, and/or a4) based on the rule applicable to the respective device, and

b) performing at least one of: servicing the device, cleaning the device and replacing of at least one part of the device, and

the procedure performed with respect to all devices exhibiting ratios comprised in the higher ratio range comprises at least one of the steps of determining the updated calibration time interval: c1) to be longer than the currently applied calibration time interval and shorter or equal to the recommended interval determined for the respective device, c2) based on a rule accounting for at least one requirement, restriction or circumstance prevailing at the operating site, c3) to be equal to the longest or one of the longest intervals comprised in a predefined set of intervals comprising a limited number of intervals of different lengths that is shorter than or equal to the recommended interval determined for the respective device, c4) to be shorter or equal to at least one of: a maximum permissible interval length defined for the respective device and a maximum permissible interval length defined for the operating site, and/or c5) based on the rule applicable to the respective device.

A third refinement comprises a method, further comprising the steps of: repeating the performance of the method for at least one more calibration cycle, by:

during each cycle performing the method steps of performing the calibrations, determining the ratios, reviewing and updating the currently applied calibration time intervals and of scheduling and performing the next calibrations, wherein during each cycle following the first performance of the method, the currently applied calibration time intervals are given by the corresponding updated calibration times intervals determined during the previous cycle.

Fourths refinements comprise a method, wherein:

each recommended interval is determined such, that recommended intervals determined for devices exhibiting a higher degree of compliancy are longer than recommended intervals determined for devices exhibiting a lower degree of compliancy and vice versa, each calibration of each device scheduled according to one of said time schedules is performed at a calibration time terminating an operating time interval during which the respective device has been operated at the operating site, and/or each scheduled calibration time determined for one of the devices corresponds to a scheduled interval of a length given by a time difference between the respective scheduled calibration time and a calibration time at which the respective device or its predecessor in case the device has been replaced has last been calibrated prior to the scheduled calibration time.

A fifth refinement comprises a method, further comprising the steps of:

for at least one or each calibration of at least one or all devices of the group recording a data set comprising a device identification of the respective device and at least two or all of: the recommended interval, the currently applied calibration time interval, the updated calibration time interval, the scheduled interval and the operating time interval following the respective calibration, and performing at least one of the steps of: determining at least one indicator indicative of the performance of the method for at least one of the data sets or based on the intervals comprised in at least one of the data sets, recording at least one of said indicators, displaying at least one of said indicators, monitoring at least one of said indicators and of issuing a notification when one of said monitored indicators exceeds a threshold defined for the respective indicator.

A refinement of the fifth refinement comprises a method, wherein said indicators comprise at least one of:

a first asset value quantifying an increased cost associated with updates wherein the currently applied calibration time interval is shortened such that the updated calibration time interval is shorter than the recommended interval, a second asset value quantifying an increased risk associated with updates, wherein the currently applied calibration time interval is extended such that the updated calibration time interval is longer than the recommended interval, a third asset value quantifying a cost reduction potential used by updates, wherein the currently applied calibration time interval is extended such that the updated calibration time interval is shorter or equal to the recommend interval, a fourth asset value quantifying a risk reduction potential used by updates, wherein the currently applied calibration time interval is reduced such that the updated calibration time interval is longer or equal to the recommended interval, a combined asset value given by the only one of the first asset value, the second asset value, the third asset value first and the fourth asset values defined for the respective data set,

at least one scheduled asset value each determined in the same way as one of the first asset value, the second asset value, the third asset value, the fourth asset value and the combined asset value by replacing the updated calibration time intervals applied in the respective determination by the scheduled interval,

at least one implemented asset value each determined in the same way as one of the first asset value, the second asset value, the third asset value, the fourth asset value and the combined asset value by replacing the updated calibration time intervals applied in the respective determination by the operating time interval,

at least one calibration value, wherein each calibration value is determined based on the intervals comprised in one of the data sets based on or as a difference or an absolute value of the difference between or a quotient of the operating time interval and the scheduled calibration time interval comprised in the respective data set,

at least one indicator value determined based on the intervals comprised in one of the data sets based on or as a difference or an absolute value of the difference between or a quotient of the recommended interval and the currently applied calibration time interval,

at least one indicator value determined based on the intervals comprised in one of the data sets based on or as a difference or an absolute value of the difference between or a quotient of the recommended interval and the updated calibration time interval,

at least one indicator value determined based on the intervals comprised in one of the data sets based on or as a difference or an absolute value of the difference between or a quotient of the updated calibration time interval and the scheduled interval,

at least one indicator value determined based on the intervals comprised in one of the data sets based on or as a difference or an absolute value of the difference between or a quotient of the updated calibration time interval and the currently applied calibration time interval, and

at least one other indicator.

A refinement of the fifth refinement further comprises the steps of:

defining at least one device group, wherein said device groups comprise at least one of: at least one device-group each comprising a single specific device, at least one device-group each comprising devices of a given class or type, at least one device-group each comprising devices operating on a specific section of the operating site or on a section, that needs to be shut down every time one of the device operating on this section is calibrated, a device-group comprising all devices operating on the operating site and/or at least one other device-group,

determining at least one group-indicator for each of at least one of the device-groups, wherein each group-indicator is determined based on, as an average or an average of the absolute values of one of the indicators determined for each of the data sets recorded for the devices comprised in the device-group during a given time period, and

performing at least one of the steps of: determining at least one of the group-indicators for several consecutive give time periods, recording at least one of said group-indicators, displaying at least one of said group-indicators, monitoring at least one of said group-indicators and of issuing a notification when one of said monitored group-indicators exceeds a threshold defined for the respective group-specific indicator.

A refinement of the fifth refinement further comprises the steps of: based on at least one of: the first asset values, the second asset values, the third asset values, the fourth asset values, the combined asset values, the scheduled asset values, the implemented asset values and/or at least one of the group-indicators each determined based on one of the first asset values, the second asset values, the third asset values, the fourth asset values, the combined asset values, the scheduled asset values or the implemented asset values performing at least one of identifying, quantifying, providing, displaying and monitoring at least one of: increased risks, increased costs, used or unused risk reduction potentials available according to the recommended intervals and used or unused cost reduction potentials available according to the recommended intervals.

A refinement of the last mentioned refinement further comprises the step of: in case one of said increased risks, increased costs, unused cost reduction potentials and/or unused risk reduction potentials exceeds a given threshold determining at least one root cause root causing the threshold to be exceeded based on the indicators and/or the group-indicators.

A refinement of the last mentioned refinement further comprises at least one of the steps of:

identifying at least one of the rules and/or at least one of the procedure steps of the procedures predetermined for the ratio ranges as root cause when at least one said increased risks, increased costs, unused cost reduction potentials and/or unused risk reduction potentials quantified based on the first asset values, the second asset values, the third asset values, the fourth asset values and/or at least one of the group indicators determined based on the first asset values, the second asset values, the third asset values and/or the fourth asset values the corresponding threshold, identifying scheduling as a root cause when the increased risks, the increased costs, the unused risk reduction potentials and/or the unused cost reduction potentials quantified based on least one of the scheduled asset values and/or at least one of the group indicators determined based on the scheduled asset values exceeds the value of the corresponding property quantified based on the first asset values, the second asset values, the third asset values and/or the fourth asset values by more than a predefined threshold, and identifying adherence to schedule of the performed calibrations to the time schedule as a root cause when the increased risks, the increased costs, the unused risk reduction potentials and/or the unused cost reduction potentials quantified based on least one of the implemented asset values and/or at least one of the group indicators determined based on the implemented asset values exceeds the value of the corresponding property quantified based on the scheduled asset values by more than a predefined threshold.

A refinement of the last mentioned refinement further comprises at least one of the steps of:

once a root cause has been identified amending the method by taking a corresponding countermeasure, and amending at least one of: at least one of the rules and at least one of the procedure steps of the procedures predetermined for the ratio ranges that has been identified as root cause, the scheduling identified as root cause and/or the calibration performance procedure when adherence to schedule has been identified as root cause.

The invention further comprises a calibration optimization system designed to perform at least one of the method steps of the method according to the fifth refinement, wherein:
said system comprises:

a memory,
an interface designed to receive data required by the system to store or to determine and to store the data sets in said memory,
computing means and a computer program implemented on said computing means and causing said computing means to perform the determination of the indicators and/or the group indicators based on the data sets stored in the memory, and
wherein said system is designed to perform at least one of:

recording at least one of said indicators and/or said group-indicators,
providing at least one of said indicators and/or said group-indicators via an output of system,
displaying at least one of said indicators and/or said group-indicators on a display comprised in or connected to said system,
monitoring at least one of said indicators and/or said group-indicators, and
issuing a notification when one of the monitored indicators and/or said monitored group-indicators exceeds a threshold defined for it.

The invention and further advantages are explained in more detail using the figures of the drawing.

Fig. 1 shows:     a group of measurement devices operating on an operating site;
Fig. 2 shows:     an operating site, a calibration site and a calibration optimization system;
Fig. 3 shows:     a set of ratio ranges;
Fig. 4 shows:     a calibration cycle for a single device;
Fig. 5 shows:     intervals, risk and cost for a calibration cycle of a device;
Fig. 6 shows:     a set of formulas for determining asset values based on the updated calibration time intervals;
Fig. 7 shows:     asset values determined for consecutive calibration cycles;
Fig. 8 shows:     a set for formulas for determining scheduled asset values based on scheduled intervals;
Fig. 9 shows:     a set for formulas for determining implemented asset values based on operating time intervals,
Fig. 10 shows:    group-asset indicators determined based on data sets recorded during consecutive time periods.

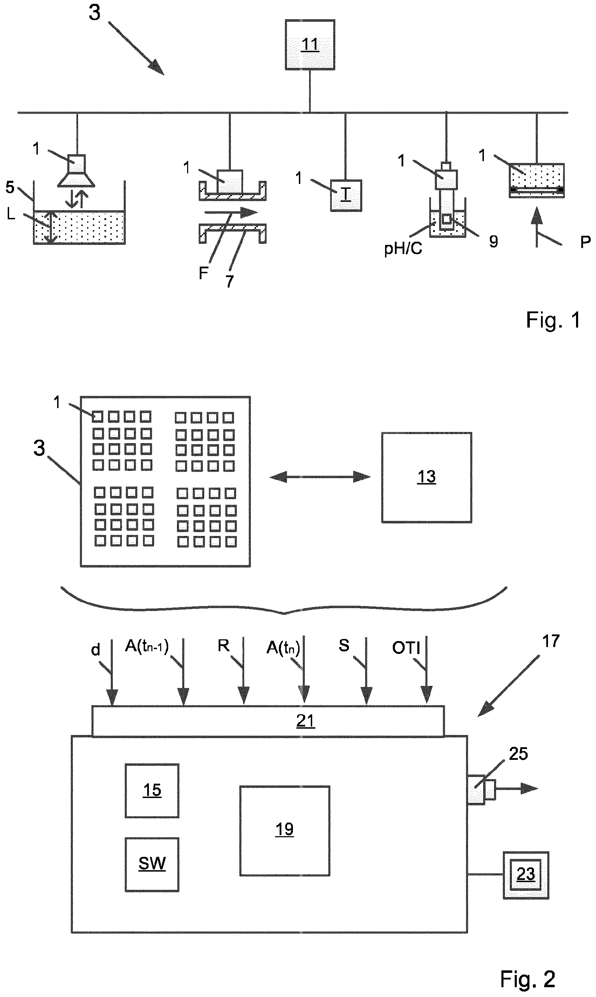

The invention provides a method of operating a group of one or more devices 1 on an operating site 3 and of calibrating these devices 1. Fig. 1 shows an example of a group of devices 1 operated on the operating site 3. The operating site 3 is for example an industrial site, e.g. a production or processing plant, a refinery, a steel furnace, or a laboratory. Each device 1 is a measurement device 1. During operation each device 1 is installed at a specific location on the operating site 3 where it measures at least one measurement variable. The devices 1 can be any type of measurement device available on the market. Fig. 1 shows an example comprising a level measurement device measuring a level L of a product in a container 5, a flow meter measuring a flow F of a product flowing through a pipe 7, a temperature measurement device measuring a temperature T of a gas, a liquid or an object, a measurement device comprising a sensor 9 measuring a pH value of a medium or a concentration C of a component comprised in the medium and a pressure measurement device measuring a pressure p exerted on the device. Obviously more or less devices 1 and/or devices 1 of other types can be comprised in the group. As an option at least one or all device 1 can be connected to or communicate with a super-ordinated unit 11. As an example, the super-ordinated unit 11 can e.g. comprise a control system for at least one of managing process control, process visualization and process monitoring of a process performed at the operating site 3.

The calibrations of each of the devices 1 are executed based on time schedules determined based on calibration time intervals A determined for each of the devices 1. With respect to new devices 1 taken into operation for the first time, the calibration time interval A can e.g. be determined as or based on a manufacturer recommendation provided by the manufacturer of the device 1. With respect to devices 1, that have already been operated at the operating site 3 at least once the calibration time interval A is given by the interval currently applied to the respective device 1.

With respect to the calibrations of each of the devices 1 calibration methods known in the art suitable for calibrating devices of the respective type can be applied. These calibrations can e.g. be performed at the operating site 3 or on purpose built calibration sites, as shown in fig. 2 depicting the operating site 3 on which the devices 1 are operated and the calibration site(s) 13 on which the calibrations of the devices 1 are performed. As an example, flow meters measuring a flow of a medium through a pipe 7 can e.g. be calibrated on purpose built calibration rigs designed to produce flows of accurately determinable size through the flow meter installed on the rig.

During each calibration of each of the devices 1 of the group a degree of compliancy of the respective device 1 to a requirement specified for the respective device 1 is determined. As an example, the degree of compliancy to a measurement accuracy specified for the device 1 can e.g. be determined based on a measurement error of the device 1 determined during calibration. Based on the degree of compliancy determined during the calibration of the device 1 a recommended interval R is determined for the respective device 1. To this extent, any method capable of determining individually determined next calibration time intervals after which a specific device shall be calibrated based on its degree of compliancy to a specified requirement determined during the present calibration can be applied. As an example, the method described in EP 2 602 680 B1, incorporated herein by reference, can be applied. According to this method an optimized next calibration time, at which a specific device shall be calibrated next is determined as a time which is earlier or equal to a time, at which a measurement error of the device will exceed a predetermined maximum permissible error. This time is determined based on a Monte Carlo simulation performed based on the measurement errors of the respective device 1 determined during at least two previously performed calibrations and probability density functions for determining a measurement error in the respective calibration solely due to an uncertainty inherent to the respective calibration procedure. Alternatively, other methods providing individually determined recommended intervals R based on the degree of compliancy of the respective device can be applied without deviating from the scope of the invention described herein.

Regardless of the method applied, the recommended intervals R are preferably determined such, that the recommended intervals R determined for devices 1 exhibiting a higher degree of compliancy are longer than the recommended intervals R determined for devices 1 exhibiting a lower degree of compliancy and vice versa. As a result, each recommended interval R is individually determined and recommended intervals R determined during consecutive calibrations of the same device 1 can be different. Each individually determined recommended interval R represents a device-specific optimum length for the next calibration time interval of the device 1 under calibration in terms of reducing the risk that the device 1 will become non-compliant during operation prior to its next calibration, as well as in terms of reducing calibration costs by increasing the lengths of the next calibration time interval to an extent that can be safely applied in view of the risk involved for the device 1 to become non-compliant prior to its next calibration due to its present degree of compliancy.

In difference to the methods described in the prior art, the recommended intervals R determined for each device 1 during each of its calibrations are not applied directly to schedule the next calibrations of these devices 1. Instead, for each calibration a ratio $r := R/A$ given by the recommended interval R divided by the calibration time interval $A(t_{n-1})$ currently applied to the respective device 1 is determined. In case the present calibration performed at a calibration time $t_n$ is the first calibration of the respective device 1, the currently applied calibration time interval $A(t_{n-1})$ corresponds to the interval determined for the new device 1 as described above. In case the device 1 has been calibrated at least once before, the currently applied calibration time interval $A(t_{n-1})$ correspond to the calibration time interval $A(t_{n-1})$ applied to the device 1 following the previous calibration performed at the previous calibration time $t_{n-1}$.

In addition, the currently applied calibration time intervals $A(t_{n-1})$ are reviewed based on the ratios r determined for each of the devices 1 and a predetermined set of ratio ranges I, II, III. This is done by for each device 1 performing a procedure predetermined for the ratio range I, II, III comprising ratios of the size of the ratio r determined for the respective device 1 or a replacement device 1 replacing the device 1 and by updating the calibration time interval

$A(t_{n-1})$ currently applied to the respective device 1 based a rule defined for the respective ratio range I, II, III and/or based on a rule applicable to the respective device 1.

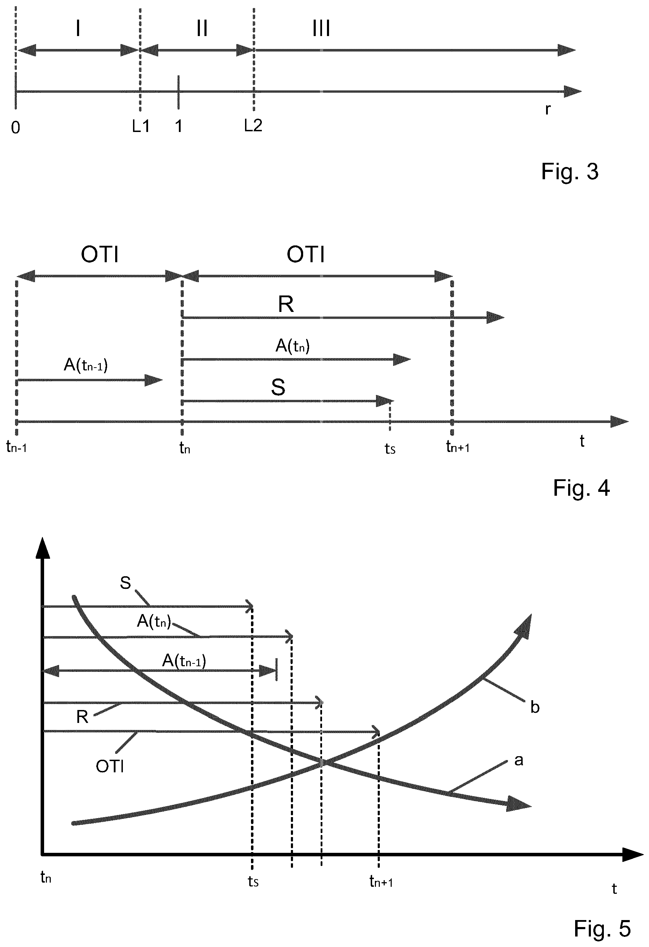

The set of ratio ranges preferably comprises a small number larger or equal to two of nonoverlapping ratio ranges I, II, III. Fig. 3 shows an example comprising a of a set of three ratio ranges. The lower ratio range I comprises ratios r ranging from zero to an upper limit L1 of the lower ratio range I smaller than 1, preferably smaller or equal to 0.75. The intermediate range II comprises ratios r, wherein the recommended interval R and the currently applied calibration time interval $A(t_{n-1})$ are of the same order of magnitude. As an example, the intermediate range II can range from the upper limit L1 of the proceeding lower range I to an upper limit L2 of the intermediate range II larger than 1 and preferably smaller or equal to 1.25 or smaller or equal to 2. The higher ratio range III comprises ratios r, wherein the recommended interval R is larger, preferably significantly larger, than the currently applied calibration time interval $A(t_{n-1})$. As an example, the higher ratio range III can comprise all ratios r exceeding a given threshold, e.g. a threshold given by the upper limit L2 of the intermediate ratio range II. As an alternative option, at least one of the ratio ranges I, II, III shown in Fig. 3 can be subdivided into two or more ratio ranges and a different procedure can be predetermined for each of these ranges.

Regardless of the number of ratio ranges I, II, III and the upper and/or lower limits L1, L2 applied, the procedures are preferably determined based on the size of the ratios r comprised in the respective ratio range I, II, III and as an option, preferably also based on requirements prevailing at the operating site 3.

As an example the procedure performed with respect to all devices 1 exhibiting ratios r comprised in the lower ratio range I preferably comprises a first procedure step of performing at least one of: adjusting, servicing and repairing the device 1. Adjusting of the device 1 is preferably performed based on the calibration data obtained during the calibration and can for example include adjustments of: offset, gain and/or span of the measurement indications of the device 1. Servicing can e.g. include at least one of: cleaning of the device 1, performing a visual inspection, replacing at least one part of the device 1 subjected to wear and tear and of performing a special test or an inspection of individual components of the device 1. Repairing of the device can e.g. include a repair or a replacement of at least one faulty component of the device 1. Following this a second procedure step is performed comprising the steps of re-calibrating the device 1, re-determining the recommended interval R and re-determining the ratio r based on the re-determined recommended interval R. As an option, the procedure may require, that the device 1 is replaced when the re-determined recommended calibration time R is shorter than a minimum interval $CTI_{min}$ defined for the device 1. In these cases, the ratio r does not have to be re-determined. As a further option, the procedure may require that the first and the second procedure steps are only applied to devices 1 exhibiting a ratio r exceeding a predefined threshold $r_{min}$, and that devices 1 exhibiting a ratio r smaller than this threshold $r_{min}$ are replaced. As a further option, the procedure may require that the device 1 is replaced in all cases, wherein the re-determined ratio r belongs to the same ratio range I as the previously determined ratio r. Finally, as a third procedure step, the currently applied calibration time interval $A(t_{n-1})$ is updated based on the rule defined for the lower ratio range I and/or based on the rule applicable to the respective device 1 by determining the updated calibration time interval $A(t_n)$ for the respective device 1 or the replacement device 1 replacing the device 1.

The rule applicable to the respective device 1 can e.g. be a rule according to which the updated calibration time interval $A(t_n)$ is set equal to the currently applied calibration time interval $A(t_{n-1})$ or a predetermined fixed calibration time interval predetermined for the respective device 1 or a class of devices 1 comprising the respective device 1. The rule applicable to the respective device 1 can e.g. be applied to all devices 1 the respective rule is applicable to regardless of the ratio r determined for them. In that case, the same rule can be comprised in each of the procedures defined for the ratio ranges I, II, III. Based on rule(s) applicable to the respective device 1, there is always a possibility, that at least one of the thus determined updated calibration time intervals $A(t_n)$ may be longer than the recommended interval R determined for the respective device 1.

The rule defined for the lower ration range I preferably requires, that the updated calibration time interval $A(t_n)$ is determined based on the re-determined recommended interval R in all cases, where the device 1 has not been replaced. To this extent, the updated calibration time interval $A(t_n)$ can e.g. be determined based on a product given by multiplying the re-determined recommended interval R with a predefined constant, e.g. by determining the updated calibration time interval $A(t_n)$ to be equal to an interval shorter than the product and longer than the minimum interval $CTI_{min}$ defined for the respective device 1. In addition, this rule may require, that the updated calibration time interval $A(t_n)$ is determined as described above with respect to the determination of the initial calibration time interval A for new devices 1, in all cases wherein the device 1 has been replaced by a new replacement device 1.

The intermediate ratio range II comprises ratios r, wherein the recommended interval R and the currently applied calibration time interval A are of the same order of magnitude. Since the recommended intervals R are determined based on the degree of compliancy of the respective device 1, it is sufficient for the procedure defined for the intermediate ratio range II to solely comprise the step of updating the calibration time interval A. The corresponding rule defined for the intermediate ratio range II preferably requires, that the updated calibration time interval $A(t_n)$ is determined based on the recommended interval R and/or the currently applied calibration time interval $A(t_{n-1})$. As an example, the updated calibration time interval $A(t_n)$ can be determined to be equal to the currently applied calibration time interval $A(t_{n-1})$, to be equal to the recommended interval R or to be equal to the longer, the shorter or the average of the currently applied calibration time interval $A(t_{n-1})$ and the recommended interval R. As an option, the rule defined for the intermediate ratio range II may be defined to additionally account for at least one requirement, restriction or circumstance prevailing at the operating site, and/or at least one special requirement regarding at least one of the devices 1 of the group. Even though the single step of updating the currently applied calibration time interval A based on the rule defined for the intermediate ratio range II and/or based on the rule applicable to the respective device 1 is already sufficient, the procedure defined for the intermediate ratio range II can comprise additional steps, e.g. steps directed to enhance the long-term stability of operating the respective device 1, like e.g. at least one of: servicing the device 1, cleaning the device 1 and a replacement of at least one part subjected to wear and tear.

The higher ratio range III comprises ratios r, wherein the recommended interval R is considerably longer than the currently applied calibration time interval A. Since the recommended intervals R are determined based on the degree of compliancy of the respective device 1, it is sufficient for the procedure defined for the higher ratio range III to solely comprise the step of updating the currently applied calibration time interval A based on the rule defined for the higher ratio range III and/or based on the rule applicable to the respective device 1.

The rule defined for the higher ratio range III preferably requires for each updated calibration time interval $A(t_n)$ to be determined to be longer than the currently applied calibration time interval $A(t_{n-1})$ and shorter or equal to the recommended interval R determined for the respective device 1. As an additional option, the flexibility given by this range extending from the currently applied calibration time interval $A(t_{n-1})$ to the recommended interval R, is preferably used to optimize the efficiency and cost effectiveness of the performance of the calibrations of the devices 1 of the group. In this respect, the rule defined for the higher ratio range III may be defined to additionally account for at least one requirement, restriction or circumstance prevailing at the operating site, like e.g. the flexibility and availability of calibration times at which calibrations of the respective device 1 can be performed and/or special requirements regarding at least one of the devices 1 of the group. As an example the rule defined for the higher ratio range III may require, that calibrations time intervals $A(t_n)$ for all devices 1 or for at least one or more specific devices 1 are always determined to be longer than a given minimum interval $CTI_{min}$ and/or shorter than a given maximum interval $CTI_{max}$. As another example the rule defined for the higher ratio range III may require that updated calibrations time intervals $A(t_n)$ for all devices 1 installed on a certain section of the operating site correspond to time intervals between regular downtimes of this section of the operating site, during which calibrations of devices 1 operating in these sections can be performed without any disturbance of the process performed at the operating site 3. As a further option, the updated calibration time intervals $A(t_n)$ can e.g. be determined based on a set of intervals comprising a limited number of intervals of different lengths. In this case, each updated calibration time interval $A(t_n)$ is determined to be equal to the longest or one of the longest intervals comprised in the set of intervals that is shorter than or equal to the recommended interval R determined for the respective device 1. This reduces the variety of different interval lengths of the thus updated calibration time intervals $A(t_n)$ down to the limited number of lengths comprised in the set of intervals. This is especially advantageous when the group comprises a large number of devices 1, e.g. more than 10 or 100 or even more than 1000 devices 1, because it allows for calibrations of larger numbers of devices 1 to be synchronized.

As an alternative or an additional option, the updated calibration time intervals $A(t_n)$ can be determined to be shorter or equal to at least one of: a maximum permissible interval length defined for the respective device 1 and a maximum permissible interval length defined for the operating site 3. This reduces the risk that any one of the devices 1, this rule is applied to, becomes non-compliant during operation prior to its next calibration.

Other rules, or rules given by a combination of a rule defined for one of the ratio ranges I, II, III and a rule applicable to the respective device 1, other sets of ratio ranges and/or other procedures can be applied without deviating from the scope of the invention.

Following the reviewing and the determination of the updated calibration time intervals $A(t_n)$ the time schedule providing scheduled calibrations times $t_S$ for each device 1, at which the respective device 1 shall be calibrated again is determined based on the updated calibration time intervals $A(t_n)$. This renders a scheduled interval S for each device 1 or the replacement device 1 replacing the respective device 1 given by the time difference between the scheduled calibration time $t_S$ scheduled for the respective device 1 and the calibration time $t_n$, at which the respective device 1 - or its predecessor in case has been replaced - has last been calibrated prior to the scheduled calibration time $t_S$. As an option the scheduled calibration times $t_S$ and thus also the scheduled intervals S are preferably determined by additionally accounting for at least one constraint prevailing with respect to at least one of: the specific device 1, the operating site 3 and the calibration site 13 governing the flexibility and the availability of calibration times at which calibrations of the respective device 1 or replacement device 1 can be performed. Finally the next calibrations of the devices 1 are performed according to the previously determined time schedule.

This method of operating and calibrating the group of measurement devices 1 has the advantages mentioned above. The method can be terminated after the calibrations of the devices 1 have been performed according to the previously determined time schedule. Alternatively, the method can be performed repeatedly for as many calibration cycles as desired or required. In that case each cycle comprises the method steps of performing the calibrations, determining the ratios r, reviewing and updating the currently applied calibration time intervals $A(t_{n-1})$ and of scheduling

and performing the next calibrations as described above. Thus, during each cycle following the first performance of the method, the currently applied calibration time intervals $A(t_{n-1})$ are given by the corresponding updated calibration times intervals $A(t_n)$ determined during the previous cycle.

Repeated performance of this method has the advantage, that each calibration cycle contributes to the reduction of the overall calibration cost, due to all those devices 1 for which the updated calibration time interval $A(t_n)$ is longer than the currently applied calibration time interval $A(t_{n-1})$. In addition, each calibration cycle contributes to the reduction of the risk of operating a non-compliant device 1, due to all compliant devices 1 having a lower degree of compliancy that were identified and for which correspondingly short updated calibration time intervals $A(t_n)$ have been determined. Fig. 4 shows an example of a calibration cycle for a single device 1, that was last put into operation at a time $t_{n-1}$. This device 1 is calibrated at a calibration time $t_n$ scheduled according to the calibration time interval $A(t_{n-1})$ currently applied to the device 1. This calibration time interval $A(t_{n-1})$ is either the initial interval determined for the new device 1 or the updated calibration time interval $A(t_{n-1})$ determined during the previous calibration cycle. In the latter case the starting time $t_{n-1}$ corresponds to calibration time $t_{n-1}$ at which the device 1 was last calibrated. The performance of the calibration at the calibration time $t_n$ terminates a proceeding operating time interval OTI of a length given by given the time difference between the calibration time $t_n$ and the starting time $t_{n-1}$. Based on the currently applied calibration time interval $A(t_{n-1})$ and the calibration performed at the calibration time $t_n$ the recommended interval R, the updated calibration time interval $A(t_n)$ and the time schedule providing the scheduled calibration time $t_S$ corresponding to the scheduled interval S shown in fig. 4 are determined. Next, the device 1 is recalibrated at the next calibration time $t_{n+1}$ terminating the next operating time interval OTI of a length given by the time difference between the next calibration time $t_{n+1}$ and the calibration time $t_n$.

In real life, it is not always possible to perform calibrations at the exact points in time given by the scheduled calibration times $t_S$. This can have various reason, like e.g. changes of the workload of technicians performing the calibrations, unexpected delays, e.g. due to downtimes of the calibration site 13, unexpected accelerations, e.g. due to free calibration capacities available at the calibration site 13, or special circumstances occurring at the operating site 3 affecting the performance of the calibration. In consequence, the lengths of the operating time intervals OTI and the corresponding scheduled intervals S are not necessarily identical.

In consequence, the method renders a set of intervals comprising the recommended interval R, the currently applied and the updated calibration time interval $A(t_{n-1})$, $A(t_n)$, the scheduled interval S and the operating time interval OTI following the respective calibration for each calibration of each device 1. Fig. 5 shows an example of a single set of intervals, wherein all intervals comprised in the set are different. When only a single device 1 is considered or when constraints limiting the availability and the flexibility of calibration times and additional costs caused by these constraints are ignored or do not exist, calibration costs decrease with increasing length of an operating time t the device 1 is operated for as indicated by arrow a shown in fig. 5. Also, the risk for each device 1 to become non-compliant during operation increases with increasing length of the operating time t as indicated by arrow b in fig. 5. Based on this, the recommended interval R constitutes the optimum interval length for the respective device 1 with respect to both the risk and the cost involved.

Assuming an optimum performance of each method step and procedures and rules best suited for the application, the differences between the individual intervals comprised in each set are solely due and justified by the circumstances and conditions prevailing at the operating site 3. To give an example, additional costs caused by operating time intervals OTI, that are shorter than the corresponding recommended intervals R can e.g. be justified by the costs saved by the reduction of downtimes of the operating site 3 required to perform the calibrations and/or saved by the synchronization of calibrations of several devices 1 achieved by this. In practice, the determination of the procedures and rules best suited for the application is a complex task. In addition, the logistics involved in performing calibrations, in particular with respect to groups comprising large numbers of device 1, are rather complex. Thus, there is a possibility that the execution of one or more method steps, as well as the predetermined procedures and rules can be further improved to profit from or to realize the full potential of the method, in particular the full risk reduction potential and/or the full cost reduction potential available according to the recommended intervals R. This could be done by amending the performance of at least one method step, at least one rule and/or at least one of the procedures. Identifying presently unused potential of the method and/or determining the amendment(s) required to make better use of the potential is not an easy task. One reasons for this is, that the potential available during each update of the calibration time interval of each device 1 depends on the length of the recommended intervals R at the time. This lengths not only depends on the long term measurement properties of the respective device 1 but also on the environment conditions the device 1 has been exposed to during operation and unexpected events affecting the measurement properties of the device 1. In consequence recommended intervals R determined for the same device 1 during consecutive calibrations can be different, which makes it very difficult to decide, whether amendments of the method are worthwhile.

As an option the method is therefore further improved by recording a data set k comprising a device identification d of the respective device 1 and at least two, preferably all of: the recommended interval R, the currently applied calibration time interval $A(t_{n-1})$, the updated calibration time interval $A(t_n)$, the scheduled interval S and the operating time interval OTI following the respective calibration, for at least one, preferably for each calibration of at least one, preferably of all of the devices 1 of the group. As an option, each data set k preferably also comprises the corresponding calibration time $t_n$. Further, at least one indicator indicative of the performance of the method is determined based on at least one of the data sets k.

As shown in Fig. 2 the data sets k can e.g. be stored in a calibration optimization system 17 comprising computing means 19, a memory 15 and an interface 21 designed to receive data required by the system 17 to store or to determine and to store the data sets k. This data is transmitted to the system 17, which will then store the data sets k in the memory 15. The computing means 19 are designed to perform a computer program SW implemented on said computing means 19 and causing the computing means 19 to perform the determination of the indicators based on the data sets k stored in the memory 15. As an option, at least one of the indicators, preferably all of the indicators are recorded, displayed and/or monitored by the system 17. As a further option a notification is preferably issued when one of the monitored indicators exceeds a threshold defined for the respective indicator. To this extent, the indicators are e.g. recorded in the memory 15 and/or displayed by a display 23 comprised in or connected to the calibration optimization system 17. The system 17 is preferably designed to monitor at least one of the indicators and/or comprises an output 25, designed to provide the indicators and/or to issue the notifications.

Considering the risk and the cost as the function of the operating time t shown in fig. 5 updating the calibration time interval to be equal to the recommended interval R makes use of the full potential of interval optimization which according to the recommended interval R can be safely applied. An update, wherein the currently applied calibration time interval $A(t_{n-1})$ is extended such, that the updated calibration time interval $A(t_n)$ is shorter or equal to the recommended interval R makes use of the cost reduction potential available according to the recommended interval R. An update, wherein the currently applied calibration time interval $A(t_{n-1})$ is extended such, that the updated calibration time interval $A(t_n)$ exceeds the recommended interval R causes an increased risk. On the other hand, an update, wherein the currently applied calibration time interval $A(t_{n-1})$ is shortened such, that the updated calibration time interval $A(t_n)$ is longer or equal to the recommended interval R makes use of the risk reduction potential available according to the recommended interval R. An update, wherein the currently applied calibration time interval $A(t_{n-1})$ is shortened such, that the updated calibration time interval $A(t_n)$ is shorter than the recommended interval R causes increased cost.

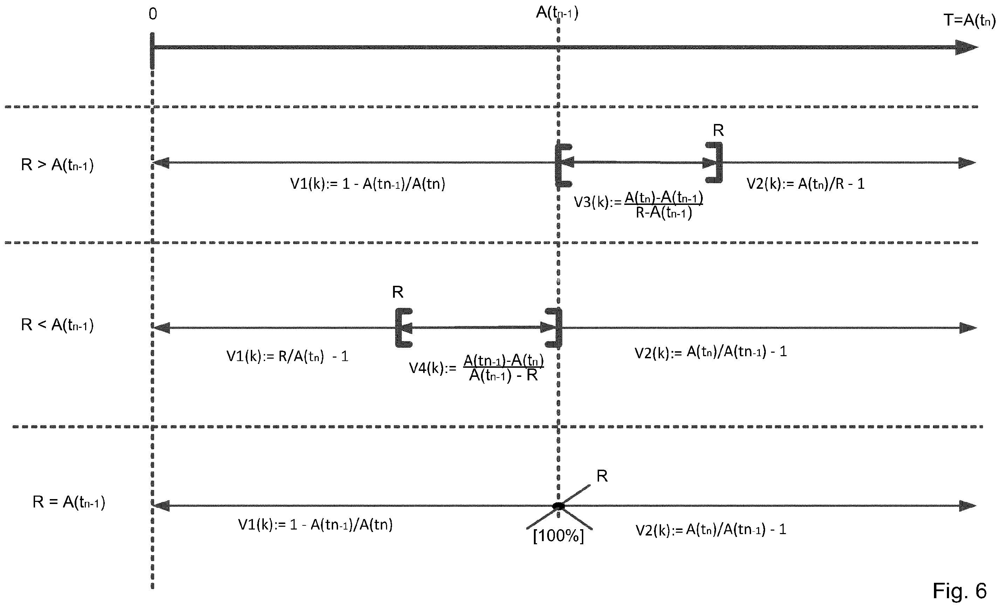

The indicators preferably comprise at least one asset value V(k) determined for each data set k. Examples of currently preferred asset values, as well as examples of formulas for their determination are shown in Fig. 6. These asset values V(k) preferably comprise at first asset value V1(k) quantifying the increased cost associated with updates, wherein the currently applied calibration time interval $A(t_{n-1})$ is shortened such that the updated calibration time interval $A(t_n)$ is shorter than the recommended interval R. In the example shown in fig. 6, the first asset value V1(k) is given by: V1 (k):= 1 - $A(t_{n-1})$ / $A(t_n)$ for all data sets k, wherein the recommended interval R is longer or equal to the currently applied calibration time interval $A(t_{n-1})$ and the updated calibration time interval $A(t_n)$ is shorter than the currently applied calibration time interval $A(t_{n-1})$, and by: V1 (k):= R/$A(t_n)$ -1 for all data sets k, wherein the recommended interval R is shorter than the currently applied calibration time interval $A(t_{n-1})$ and the updated calibration time interval $A(t_n)$ is shorter than the recommended interval R.

As an additional or alternative option the asset values V(k) preferably comprise a second asset value V2(k) quantifying the increased risk associated with updates, wherein the currently applied calibration time interval $A(t_{n-1})$ is extended such that the updated calibration time interval $A(t_n)$ longer than the recommended interval R. In the example shown in fig. 6, the second asset value V2(k) is given by: V2(k):= $A(t_n)$ / R-1 for all data sets k, wherein the recommended interval R is longer than the currently applied calibration time interval $A(t_{n-1})$ and the updated calibration time interval $A(t_n)$ is longer than the recommended interval R, and by: V2(k):= $A(t_n)$/ $A(t_{n-1})$ -1 for all data sets k, wherein the recommended interval R is shorter or equal to the currently applied calibration time interval $A(t_{n-1})$ and the updated calibration time interval $A(t_n)$ is longer than the currently applied calibration time interval $A(t_{n-1})$.

As an additional or alternative option the asset values V(k) preferably comprise a third asset value V3(k) quantifying the cost reduction potential used by updates, wherein the currently applied calibration time interval $A(t_{n-1})$ is extended such that the updated calibration time interval $A(t_n)$ shorter or equal to the recommended interval R. In the example shown in fig. 6, the third asset value V3(k) is given by: V3(k):= [$A(t_n)$ - $A(t_{n-1})$]/[R- $A(t_{n-1})$] for all data sets k, wherein the recommended interval R is longer than the currently applied calibration time interval $A(t_{n-1})$ and the updated calibration time interval $A(t_n)$ larger or equal to the currently applied calibration time interval $A(t_{n-1})$ and shorter or equal to the recommended interval, and given by: V3(k):= 100 % for all data sets k, wherein the updated calibration time interval $A(t_n)$ is equal to the recommended interval R and equal to the currently applied calibration time interval $A(t_{n-1})$.

As an additional or alternative option the asset values V(k) preferably comprise a fourth asset value V4(k) quantifying the risk reduction potential used by updates, wherein the currently applied calibration time interval $A(t_{n-1})$ is reduced such that the updated calibration time interval $A(t_n)$ is longer or equal to the recommended interval R. In the example shown in fig. 6, the fourth asset value V4(k) is given by: V4(k):= [$A(t_{n-1})$ - $A(t_n)$]/[$A(t_{n-1})$-R] for all data sets k, wherein the recommended interval R is shorter than the currently applied calibration time interval $A(t_{n-1})$ and the updated calibration time interval $A(t_n)$ is longer than or equal to the recommended interval R and shorter or equal to the currently applied calibration time interval $A(t_{n-1})$, and given by: V4(k):= 100 % for all data sets k, wherein the updated calibration time

interval $A(t_n)$ is equal to the recommended interval R and equal to the currently applied calibration time interval $A(t_{n-1})$.

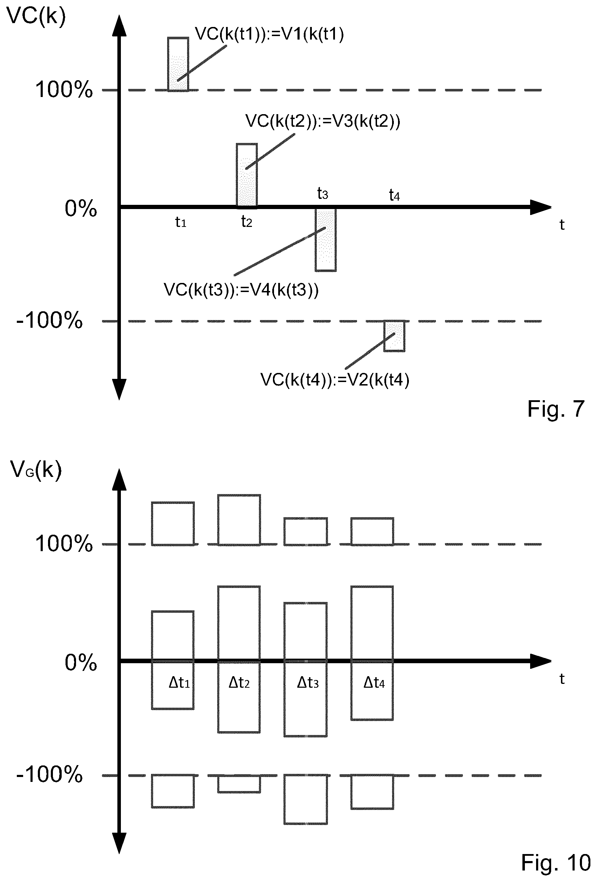

Based on the case discriminations applied in the determination of these asset values V1(k), V2(k), V3(k), V4(k), only one of the four asset values V1(k), V2(k), V3(k), V4(k) is available for each data set k. This has the advantage, that all four asset values V1(k), V2(k), V3(k), V4(k) can be summarized in a combined asset value VC(k) given by the only one of the four asset values V1(k), V2(k), V3(k), V4(k) defined for the respective data set k. These combined asset values VC(k) are preferably displayed in a diagram, shown in Fig. 7, wherein the first asset values V1(k) representing the increased costs are displayed as positive percentages exceeding 100 %, wherein the second asset values V2(k) representing the increased risk are displayed as negative percentages below - 100 %, wherein the third asset values V3(k) representing the cost reduction potentials used by the respective update are displayed as positive percentages ranging from 0% to 100 %, and wherein the fourth assed values V4(k) representing the risk reduction potentials used by the respective update are displayed as negative percentages ranging from 0% to -100 %. Obviously other display forms can be used. As an example, two diagrams can be displayed, one comprising the increased risk V2(k), the used cost reduction potential V3(k) and the increased cost V1(k) determined for data sets k, wherein the recommended interval R is larger or equal to the currently applied interval $A(t_{n-1})$ and a second one comprising the increased costs V1(k), the used risk reduction potential V4(k) and the increased risk V2(k) determined for data sets k, wherein the recommended interval R smaller than the currently applied interval $A(t_{n-1})$.

Obviously other ways of determining these asset values conveying the same, an equivalent, a corresponding or a related information content can be applied, without deviating from the scope of the present invention. As an example the unused cost reduction potential can e.g. be applied instead of the used cost reduction potential and the unused risk reduction potential can e.g. be applied instead of the used risk reduction potential.

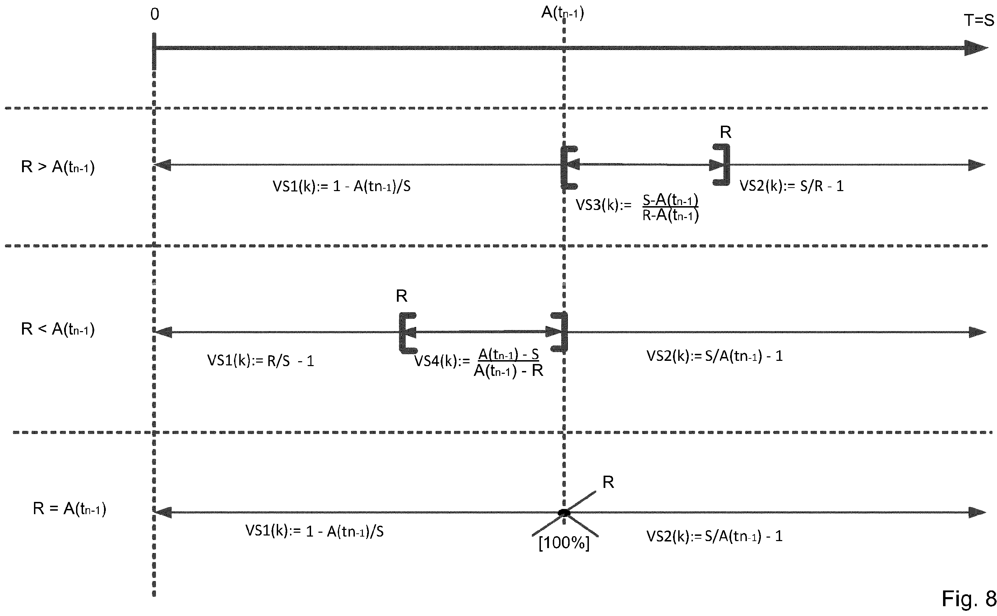

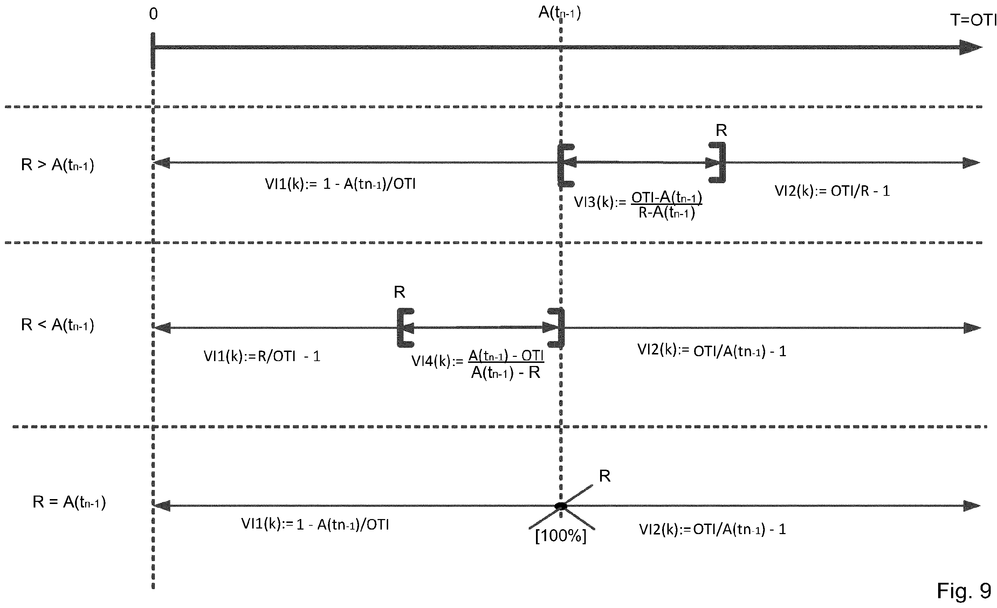

As an additional option, the indicators preferably comprise at least one scheduled asset value VS1(k), VS2(k), VS3(k), VS4(k), VCS(k) each determined in the same way as one of the first asset value V1(k), the second asset value V2(k), the third asset value V3(k), the fourth asset value V4(k) and the combined asset value VC(k) by replacing the updated calibration time intervals $A(t_n)$ applied in the respective determination by the scheduled interval S as shown in fig. 8. Alternatively or in addition to this, indicators preferably comprise at least one implemented asset value VI1(k), VI2(k), VI3(k), VI4(k), VCI(k) each determined in the same way as one of the first asset value V1(k), the second asset value V2(k), the third asset value V3(k), the fourth asset value V4(k) and the combined asset value VC(k) by replacing the updated calibration time intervals $A(t_n)$ applied in the respective determination by the operating time interval OTI as shown in fig. 9.

As an alternative or additional option, the indicators preferably comprise at least one calibration value W(k) indicative of the adherence to schedule of the performance of the respective calibration to the time schedule based on which it is performed. Each calibration value W(k) is determined based on the intervals comprised in one of the data sets k based on or as a difference or an absolute value of the difference between the operating time interval OTI and the scheduled calibration time interval S comprised in the respective data set k, e.g. by W(k):= OTI-S. As an alternative option, the calibration values W(k) can be determined as or based on a quotient given by the operating time interval OTI divided by the scheduled interval S comprised in the respective data set k, e.g. by W(k):= OTI/S.

As an alternative or additional option, the indicators preferably comprise at least one other indicator value determined based on the intervals comprised in one of the data sets k. Examples are indicator values determined for at least one or each data set k based on or as a difference or an absolute value of the difference between or a quotient of: 1) the recommended interval R and the currently applied calibration time interval $A(t_{n-1})$, 2) the recommended interval R and the updated calibration time interval $A(t_n)$, 3) the updated calibration time interval $A(t_n)$ and the scheduled interval S, or 3) the updated calibration time interval $A(t_n)$ and the currently applied calibration time interval $A(t_{n-1})$.

At least one of the indicators, preferably more or all the indicators listed above are preferably each determined for data sets k recorded during consecutive calibrations cycles of at least one, preferably all of the devices 1 and are preferably also displayed. Fig. 7 shows an example of combined assed values VC(k) of data sets k recorded for calibrations of the same device 1, at four different calibration times t1, ..., t4, wherein each time the updated calibration time $A(t_n)$ differed from the currently applied calibration time interval $A(t_{n-1})$. In this example, the update performed at the time t1 caused increased costs represented by the first asset value V1(k(t1)). The update performed at the time t2 made use of a percentage of the cost reduction potential available at the time t2 given by the third asset value V3(k(t2). The update performed at the time t3 made use of a percentage of the risk reduction potential available at the time t3 given by the fourth asset value V4(k(t3). The update performed at the time t4 caused an increased risk given by the second asset value V2(k(t4)).

As a further option, at least one device-group is preferably defined and at least one group-indicator is determined for at least one of the device-groups. The device-groups preferably comprise at least one of: at least one device-group each comprising a single specific device 1, at least one device-group each comprising devices 1 of a given class or type, at least one device-group each comprising devices 1 operating on a specific section of the operating site 3, like for example a section, that needs to be shut down every time one of the device 1 operating on this section is calibrated, a device-group comprising all devices 1 operating on the operating site 3, and/or at least one other device-group. Each of the group-indicator is preferably determined based on, as an average or an average of the absolute values of one of the previously described indicators determined for each of the data sets k recorded for the devices 1 comprised in the device-group during a given time period Δti. Each of these group-indicators is preferably determined for several consecutive given time periods Δti. The group-indicators are preferably determined, recorded, displayed and monitored and a notification is preferably issued, when one of the monitored group-indicators exceeds a threshold defined for the respective group-indicator.

With respect to each of the asset values V(k) comprising the first asset value V1(k), the second asset value V2(k), the third asset value V3(k), the fourth asset value V4(k), the combined asset value VC(k), the scheduled asset value VS(k) and implemented asset value VI(k), the corresponding group-asset indicator $V_G$ is preferably determined by the user of the method or by the calibration optimization system 17 based on or as an average of the respective asset values V(k) determined for the data sets k:= 1,..., m recorded for the devices 1 comprised in the respective device-group during the given time period Δti, e.g. by:

$$V_G = \frac{1}{m} \sum_{k=1}^{m} V(k)$$

As shown in fig. 10, the group-specific asset indicators $V_G$ determined based on the first, the second, the third and the fourth asset value V1(k), V2(k), V3(k), V4(k) determined based on data sets k recorded during one of the consecutive time periods Δti are preferably determined and displayed in a diagram of the same type as the diagram shown in fig. 7. The same determination and representation is preferably also applied with respect to the scheduled asset value VS1(k), VS2(k), VS3(k), VS4(k) and the implemented asset value VI1(k), VI2(k), VI3(k), VI4(k).

With respect to the calibration values W(k) each group specific calibration indicator $W_G$ is preferably determined by the user of the method or by the calibration optimization system 17 as an average of the calibration values W(k) or as an average of the absolute values of the calibration values W(k) determined for the data sets k comprised on the respective group of data sets. Analogously, this determination of group specific indicators can also be applied with respect to the other indicator values mentioned above.

Based on at least one of: at least one of the asset values V(k) and at least one of the group-specific asset indicators $V_G$ increased risks, increased costs, used or unused risk reduction potentials and/or used or unused cost reduction potentials available according to the recommended intervals R determined during the respective calibrations are preferably identified, quantified and/or monitored. The unused cost reduction potentials are given by the difference between the full potential available (shown as +100 %) and the used cost reduction potentials. The unused risk reduction potentials are given by the difference between the full potential available (shown as -100 %) and the used risk reduction potentials. This step is preferably performed on a device level with respect to at least one of the devices 1, on a group-level with respect to devices comprised in one of the device-groups and/or on a site level with respect to all devices 1 operating on the operating site 3. This can be done by the user of the method or by the calibration optimization system 17. In the latter case, the thus determined increased risks, increased costs and/or the used or unused potentials are preferably provided and/or displayed by the calibration optimization system 17.

In case an increased risk, an increased cost and/or an unused potential exceeding a given threshold is identified, at least one root cause root causing the threshold to be exceeded is preferably determined based on the indicators and/or the group-indicators.

As an example, e.g. at least one of the rules and/or at least one of the procedure steps of the procedures predetermined for the ratio ranges I, II, III is preferably identified as root cause when at least one of the increased risks, increased costs, unused cost reduction potentials and/or unused risk reduction potentials quantified based on the first asset values V1(k), the second asset values V2(k), the third asset values V3(k), the fourth asset values V4(k) and/or at least one of the group indicators determined based on the first asset values V1(k), the second asset values V2(k), the third asset values V3(k) and/or the fourth asset values V4(k) exceeds the corresponding threshold. As a further option the scheduling is preferably identified as a root cause when the increased risks, the increased costs, the unused risk reduction potentials and/or the unused cost reduction potentials quantified based on least one of the scheduled asset values VS1(k), VS2(k), VS3(k), VS4(k), and/or at least one of the group indicators determined based on the scheduled asset values VS1(k), VS2(k), VS3(k), VS4(k) exceeds the value of the corresponding property quantified based on the first asset values V1(k), the second asset values V2(k), the third asset values V3(k) and/or the fourth asset values V4(k) by more than a predefined threshold.

As a further option the adherence to schedule of the performance of the calibrations to the time schedule is preferably identified as a root cause when the increased risks, the increased costs, the unused risk reduction potentials and/or the unused cost reduction potentials quantified based on least one of the implemented asset values VI1(k), VI2(k), VI3(k), VI4(k) and/or at least one of the group indicators determined based on the implemented asset values VI1(k), VI2(k), VI3(k), VI4(k) exceeds the value of the corresponding property quantified based on the scheduled asset values VS1(k), VS2(k), VS3(k), VS4(k) by more than a predefined threshold.

Once a root cause has been identified corresponding countermeasures are preferable taken. As an example, the countermeasures can e.g. comprise amending at least one of the rules and/or at least one of the procedure step of the procedures predetermined for the ratio ranges I, II, III that have been identified as root cause, amending the scheduling identified as root cause or amending the calibration performance procedure when adherence to schedule has been identified as root cause.

Thus each of the different types of indicators, as well as the corresponding group specific indicators constitute a powerful tool for monitoring the performance of the method as well as for iteratively improving the implemented method steps to further profit from the full potential of the method in a way that is best suited for the application.

List of reference numerals

| | | | |
|---|---|---|---|
| 1 | measurement device | 15 | memory |
| 3 | operating site | 17 | calibration optimizing system |
| 5 | container | 19 | computing means |
| 7 | pipe | 21 | interface |
| 9 | sensor | 23 | display |
| 11 | super-ordinated unit | 25 | output |
| 13 | calibration site | | |

**Claims**

1. A method of operating a group of devices (1) on an operating site (3) and of calibrating said devices (1), wherein: each device (1) is a measurement device (1) and calibrations of said devices (1) are executed based on time schedules determined based on calibration time intervals (A) determined for each of the devices (1), said method comprising the steps of:

   a) during each calibration of each device (1): determining a degree of compliance of the respective device (1) to a requirement specified for this device (1), based on said degree of compliance determining a recommended interval (R) for the next calibration of the respective device (1) and determining a ratio (r) of the recommended interval (R) and the calibration time interval $(A(t_{n-1}))$ currently applied to this device (1),

   b) reviewing the calibration time intervals (A) based on said ratios (r) and a predetermined set of ratio ranges (I, II, III) by: for each device (1) performing a procedure predetermined for the ratio range (I, II, III) comprising ratios of the size of the ratio (r) determined for the respective device (1) or a replacement device (1) replacing the device (1) and updating the calibration time interval $(A(t_{n-1}))$ currently applied to the respective device (1) based on at least one of: a rule defined for the respective ratio range (I, II,III) and a rule applicable to the respective device (1), wherein the set of ratio ranges (I, II, III) comprises:

      a lower ratio range (I) comprising ratios (r) ranging from zero to an upper limit (L1) of the lower range (I) smaller than 1 or smaller or equal to 0.75,
      an intermediate range (II) comprising ratios (r), wherein the recommended interval (R) and the currently applied calibration time interval $(A(t_{n-1}))$ are of the same order of magnitude, or comprising ratios (r) ranging from the upper limit (L1) of the lower range (I) to an upper limit (L2) of the intermediate range (II) larger than 1, smaller or equal to 1,25 or smaller or equal to 2, and
      a higher ratio range (III) comprising ratios (r), wherein the recommended interval (R) is larger or significantly larger than the currently applied calibration time interval $(A(t_{n-1}))$, or comprising all ratios (r) exceeding a given threshold or a threshold given by the upper limit (L2) of the intermediate ratio range (II), and
      wherein the procedure performed with respect to all devices (1) exhibiting ratios (r) comprised in the lower ratio range (I) comprises: a first procedure step of performing at least one of: adjusting, servicing and repairing the device (1), a second procedure step of re-calibrating the device (1), re-determining the recommended interval (R) and re-determining the ratio (r) based on the re-determined recommended interval (R), and a third procedure step of determining the updated calibration time interval $(A(t_n))$ for the respective device (1) or a replacement device (1) replacing the device (1), and

   c) determining the time schedule providing scheduled calibrations times $(t_S)$ at which the devices (1) shall be calibrated again based on the updated calibration time intervals ($A(t_n)$) determined for each of the devices (1) and performing the next calibrations of the devices (1) according to the scheduled calibration times ($t_S$).

2. The Method according to claim 1, wherein: the procedure performed with respect to all devices (1) exhibiting ratios (r) comprised in the lower ratio range (I) further comprises at least one of the procedure steps of:

a) performing the first, the second and the third procedure step only with respect to devices (1) exhibiting a ratio (r) exceeding a predefined threshold ($r_{min}$) and replacing devices (1) exhibiting a ratio (r) smaller than this threshold ($r_{min}$),

b) replacing the respective device (1) in case the re-determined ratio (r) belongs to the same ratio range (I) as the previously determined ratio (r),

c) determining the updated calibration time interval $A(t_n)$ for the respective device (1) based on the rule applicable to the respective device (1) or by determining a product of the re-determined recommended interval (R) and a predefined constant and determining the updated calibration time interval ($A(t_n)$) to be equal to an interval shorter than the product and longer than a minimum interval ($CTI_{min}$) defined for the device (1), and

d) determining the updated calibration time interval $A(t_n)$ for the respective replacement device (1) based on a recommendation of a manufacturer of the replacement device (1).

3. The method according to any of claims 1 to 2, wherein:

the procedure performed with respect to all devices (1) exhibiting ratios (r) comprised in the intermediate ratio range (II) comprises at least one of the steps of:

a) determining the updated calibration time interval $A(t_n)$: a1) based on at least one of: the recommended interval (R) and the currently applied calibration time interval ($A(t_n)$), a2) to be equal to the currently applied calibration time interval ($A(t_{n-1})$), to be equal to the recommended interval (R) or to be equal to the longer or the shorter of the currently applied calibration time interval ($A(t_{n-1})$) and the recommended interval (R), a3) based on a rule taking into account at least one requirement, restriction or circumstance prevailing at the operating site (3), and/or a4) based on the rule applicable to the respective device (1), and

b) performing at least one of: servicing the device (1), cleaning the device (1) and replacing of at least one part of the device (1), and

the procedure performed with respect to all devices (1) exhibiting ratios (r) comprised in the higher ratio range (III) comprises at least one of the steps of determining the updated calibration time interval ($A(t_n)$): c1) to be longer than the currently applied calibration time interval ($A(t_{n-1})$) and shorter or equal to the recommended interval (R) determined for the respective device (1), c2) based on a rule accounting for at least one requirement, restriction or circumstance prevailing at the operating site (3), c3) to be equal to the longest or one of the longest intervals comprised in a predefined set of intervals comprising a limited number of intervals of different lengths that is shorter than or equal to the recommended interval (R) determined for the respective device (1), c4) to be shorter or equal to at least one of: a maximum permissible interval length defined for the respective device (1) and a maximum permissible interval length defined for the operating site (3), and/or c5) based on the rule applicable to the respective device (1).

4. The method according to any of claims 1 to 3, further comprising the steps of: repeating the performance of the method for at least one more calibration cycle, by:

during each cycle performing the method steps of performing the calibrations, determining the ratios (r), reviewing and updating the currently applied calibration time intervals ($A(t_{n-1})$) and of scheduling and performing the next calibrations,

wherein during each cycle following the first performance of the method, the currently applied calibration time intervals ($A(t_{n-1})$) are given by the corresponding updated calibration times intervals ($A(t_n)$) determined during the previous cycle.

5. Method according to any of claims 1 to 4, wherein:

each recommended interval (R) is determined such, that recommended intervals (R) determined for devices (1) exhibiting a higher degree of compliancy are longer than recommended intervals (R) determined for devices (1) exhibiting a lower degree of compliancy and vice versa,

each calibration of each device (1) scheduled according to one of said time schedules is performed at a calibration time ($t_n$) terminating an operating time interval (OTI) during which the respective device (1) has been operated at the operating site (3), and/or

each scheduled calibration time ($t_S$) determined for one of the devices (1) corresponds to a scheduled interval (S) of a length given by a time difference between the respective scheduled calibration time ($t_S$) and a calibration time ($t_n$) at which the respective device (1) or its predecessor in case the device (1) has been replaced has last been calibrated prior to the scheduled calibration time ($t_S$).

6. Method according to any of claims 1 to 5, further comprising the steps of:

for at least one or each calibration of at least one or all devices (1) of the group recording a data set (k) comprising a device identification (d) of the respective device (1) and at least two or all of: the recommended interval (R), the currently applied calibration time interval ($A(t_{n-1})$), the updated calibration time interval ($A(t_n)$), the scheduled interval (S) and the operating time interval (OTI) following the respective calibration, and

performing at least one of the steps of: determining at least one indicator indicative of the performance of the method for at least one of the data sets (k) or based on the intervals comprised in at least one of the data sets (k), recording at least one of said indicators, displaying at least one of said indicators, monitoring at least one of said indicators and of issuing a notification when one of said monitored indicators exceeds a threshold defined for the respective indicator.

7. Method according to claim 6, wherein said indicators comprise at least one of:

a first asset value ($V1(k)$) quantifying an increased cost associated with updates wherein the currently applied calibration time interval ($A(t_{n-1})$) is shortened such that the updated calibration time interval ($A(t_n)$) is shorter than the recommended interval (R),

a second asset value ($V2(k)$) quantifying an increased risk associated with updates, wherein the currently applied calibration time interval ($A(t_{n-1})$) is extended such that the updated calibration time interval ($A(t_n)$) is longer than the recommended interval (R),

a third asset value ($V3(k)$) quantifying a cost reduction potential used by updates, wherein the currently applied calibration time interval ($A(t_{n-1})$) is extended such that the updated calibration time interval ($A(t_n)$) is shorter or equal to the recommend interval (R),

a fourth asset value ($V4(k)$) quantifying a risk reduction potential used by updates, wherein the currently applied calibration time interval ($A(t_{n-1})$) is reduced such that the updated calibration time interval ($A(t_n)$) is longer or equal to the recommended interval (R),

a combined asset value ($VC(k)$) given by the only one of the first asset value ($V1(k)$), the second asset value ($V2(k)$), the third asset value ($V3(k)$) and the fourth asset value ($V4(k)$) defined for the respective data set (k),

at least one scheduled asset value ($VS1(k), VS2(k), VS3(k), VS4(k), VCS(k)$) each determined in the same way as one of the first asset value ($V1(k)$), the second asset value ($V2(k)$), the third asset value ($V3(k)$), the fourth asset value ($V4(k)$) and the combined asset value ($VC(k)$) by replacing the updated calibration time intervals ($A(t_n)$) applied in the respective determination by the scheduled interval (S),

at least one implemented asset value ($VI1(k), VI2(k), VI3(k), VI4(k), VCI(k)$) each determined in the same way as one of the first asset value ($V1(k)$), the second asset value ($V2(k)$), the third asset value ($V3(k)$), the fourth asset value ($V4(k)$) and the combined asset value ($VC(k)$) by replacing the updated calibration time intervals ($A(t_n)$) applied in the respective determination by the operating time interval (OTI),

at least one calibration value ($W(k)$), wherein each calibration value ($W(k)$) is determined based on the intervals comprised in one of the data sets (k) based on or as a difference or an absolute value of the difference between or a quotient of the operating time interval (OTI) and the scheduled calibration time interval (S) comprised in the respective data set (k),

at least one indicator value determined based on the intervals comprised in one of the data sets (k) based on or as a difference or an absolute value of the difference between or a quotient of the recommended interval (R) and the currently applied calibration time interval ($A(t_{n-1})$),

at least one indicator value determined based on the intervals comprised in one of the data sets (k) based on or as a difference or an absolute value of the difference between or a quotient of the recommended interval (R) and the updated calibration time interval ($A(t_n)$),

at least one indicator value determined based on the intervals comprised in one of the data sets (k) based on or as a difference or an absolute value of the difference between or a quotient of the updated calibration time interval ($A(t_n)$) and the scheduled interval (S),

at least one indicator value determined based on the intervals comprised in one of the data sets (k) based on or as a difference or an absolute value of the difference between or a quotient of the updated calibration time interval $(A(t_n))$ and the currently applied calibration time interval $(A(t_{n-1}))$, and

at least one other indicator.

**8.** Method according to any of claims 6 to 7, further comprising the steps of:

defining at least one device group, wherein said device groups comprise at least one of: at least one device-group each comprising a single specific device (1), at least one device-group each comprising devices (1) of a given class or type, at least one device-group each comprising devices (1) operating on a specific section of the operating site (3) or on a section, that needs to be shut down every time one of the device (1) operating on this section is calibrated, a device-group comprising all devices (1) operating on the operating site (3) and/or at least one other device-group,

determining at least one group-indicator for each of at least one of the device-groups, wherein each group-indicator is determined based on, as an average or an average of the absolute values of one of the indicators determined for each of the data sets (k) recorded for the devices (1) comprised in the device-group during a given time period ($\Delta$ti), and

performing at least one of the steps of: determining at least one of the group-indicators for several consecutive give time periods ($\Delta$ti), recording at least one of said group-indicators, displaying at least one of said group-indicators, monitoring at least one of said group-indicators and of issuing a notification when one of said monitored group-indicators exceeds a threshold defined for the respective group-indicator.

**9.** Method according to any of claims 6 to 8, further comprising the step of: based on at least one of: the first asset values (V1(k)), the second asset values (V2(k)), the third asset values (V3(k)), the fourth asset values (V4(k)), the combined asset values (VC(k)), the scheduled asset values (VS(k)), the implemented asset values (VI(k)) and/or at least one of the group-indicators $(V_G)$ each determined based on one of the first asset values (V1(k)), the second asset values (V2(k)), the third asset values (V3(k)), the fourth asset values (V4(k)), the combined asset values (VC(k)), the scheduled asset values (VS(k)) or the implemented asset values (VI(k)) performing at least one of identifying, quantifying, providing, displaying and monitoring at least one of: increased risks, increased costs, used or unused risk reduction potentials available according to the recommended intervals (R) and used or unused cost reduction potentials available according to the recommended intervals (R).

**10.** Method according to claim 9, further comprising the step of: in case one of said increased risks, increased costs, unused cost reduction potentials and/or unused risk reduction potentials exceeds a given threshold determining at least one root cause root causing the threshold to be exceeded based on the indicators and/or the group-indicators.

**11.** Method according to claim 10, further comprising at least one of the steps of:

identifying at least one of the rules and/or at least one of the procedure steps of the procedures predetermined for the ratio ranges (I, II, III) as root cause when at least one said increased risks, increased costs, unused cost reduction potentials and/or unused risk reduction potentials quantified based on the first asset values (V1(k)), the second asset values (V2(k)), the third asset values (V3(k)), the fourth asset values (V4(k)) and/or at least one of the group indicators determined based on the first asset values (V1(k)), the second asset values (V2(k)), the third asset values (V3(k)) and/or the fourth asset values (V4(k)) exceeds the corresponding threshold,

identifying scheduling as a root cause when the increased risks, the increased costs, the unused risk reduction potentials and/or the unused cost reduction potentials quantified based on least one of the scheduled asset values (VS1(k), VS2(k), VS3(k), VS4(k)) and/or at least one of the group indicators determined based on the scheduled asset values (VS1(k), VS2(k), VS3(k), VS4(k)) exceeds the value of the corresponding property quantified based on the first asset values (V1(k)), the second asset values (V2(k)), the third asset values (V3(k)) and/or the fourth asset values (V4(k)) by more than a predefined threshold, and

identifying adherence to schedule of the performed calibrations to the time schedule as a root cause when the increased risks, the increased costs, the unused risk reduction potentials and/or the unused cost reduction potentials quantified based on least one of the implemented asset values (VI1(k), VI2(k), VI3(k), VI4(k)) and/or at least one of the group indicators determined based on the implemented asset values (VI1(k), VI2(k), VI3(k), VI4(k)) exceeds the value of the corresponding property quantified based on the scheduled asset values (VS1(k), VS2(k), VS3(k), VS4(k)) by more than a predefined threshold.

**12.** Method according to claim 11, further comprising at least one of the steps of:

once a root cause has been identified amending the method by taking a corresponding countermeasure, and amending at least one of: at least one of the rules and at least one of the procedure steps of the procedures predetermined for the ratio ranges (I, II, III) that has been identified as root cause, the scheduling identified as root cause and/or the calibration performance procedure when adherence to schedule has been identified as root cause.

13. A calibration optimization system (17) designed to perform the method steps of any one of claims 6 to 12, wherein: said system (17) comprises:

a memory (15),
an interface (21) designed to receive data required by the system (17) to store or to determine and to store the data sets (k) in said memory (15),
computing means (19) and a computer program (SW) implemented on said computing means (19) and causing said computing means (19) to perform the determination of the indicators and/or the group indicators based on the data sets (k) stored in the memory (15), and
wherein said system (17) is designed to perform at least one of:

recording at least one of said indicators and/or said group-indicators,
providing at least one of said indicators and/or said group-indicators via an output (25) of system (17),
displaying at least one of said indicators and/or said group-indicators on a display (23) comprised in or connected to said system (17),
monitoring at least one of said indicators and/or said group-indicators, and
issuing a notification when one of the monitored indicators and/or said monitored group-indicators exceeds a threshold defined for it.

**Patentansprüche**

1. Ein Verfahren für den Betrieb einer Gruppe von Geräten (1) an einer Betriebsstätte (3) und für die Kalibrierung der genannten Geräte (1), wobei: jedes Gerät (1) ein Messgerät (1) ist und die Kalibrierungen der genannten Geräte (1) auf Basis von Zeitplänen durchgeführt werden, die auf Basis von für jedes der Geräte (1) festgelegten Kalibrierzeitintervallen (A) bestimmt werden, wobei das genannte Verfahren folgende Schritte umfasst:

a) während jeder Kalibrierung jedes Geräts (1): Festlegen eines Grades der Konformität für das jeweilige Gerät (1) mit einer für dieses Gerät (1) spezifizierten Anforderung, auf Basis des genannten Grads der Konformität Bestimmen eines empfohlenen Intervalls (R) für die nächste Kalibrierung des jeweiligen Geräts (1) und Festlegen eines Verhältnisses (r) des empfohlenen Intervalls (R) und des aktuell auf dieses Gerät (1) angewendeten Kalibrierzeitintervalls $(A(t_{n-1}))$,
b) Überprüfen der Kalibrierzeitintervalle (A) auf Basis der genannten Verhältnisse (r) und eines vorbestimmten Satzes von Verhältnisbereichen (I, II, III) durch: für jedes Gerät (1) Durchführen eines für den Verhältnisbereich (I, II, III) vorbestimmten Ablaufs, umfassend Verhältnisse der Größe des für das jeweilige Gerät (1) oder ein Austauschgerät (1) zum Austausch des Geräts bestimmten Verhältnisses (r) und Aktualisieren des Kalibrierzeitintervalls $(A(t_{n-1}))$, das aktuell auf das jeweilige Gerät (1) angewendet wird, auf Basis mindestens eines des Folgenden: einer für den jeweiligen Verhältnisbereich (I, II, III) definierten Regel und einer auf das jeweilige Gerät (1) anwendbaren Regel,
wobei der Satz an Verhältnisbereichen (I, II, III) Folgendes umfasst:

einen unteren Verhältnisbereich (I), der Verhältnisse (r) umfasst, die im Bereich von Null bis zu einer Obergrenze (L 1) des unteren Bereichs (I), kleiner als 1 oder gleich zu 0,75, liegen,
einen Zwischenbereich (II), der Verhältnisse (r) umfasst, wobei das empfohlene Intervall (R) und das aktuell angewendete Kalibrierzeitintervall $(A(t_{n-1}))$ von derselben Größenordnung sind, oder der Verhältnisse (r) umfasst, die im Bereich von der Obergrenze (L 1) des unteren Bereichs (I) bis zur Obergrenze (L2) des Zwischenbereichs (II), größer als 1, kleiner oder gleich zu 1,25 oder kleiner oder gleich zu 2, liegen, und
einen oberen Verhältnisbereich (III), der Verhältnisse (r) umfasst, wobei das empfohlene Intervall (R) größer oder erheblich größer als das aktuell angewendete Kalibrierzeitintervall $(A(t_{n-1}))$ ist, oder alle Verhältnisse (r) umfasst, die einen gegebenen Schwellenwert oder einen durch die Obergrenze (L2) gegebenen Schwellenwert des Zwischen-Verhältnisbereichs (II) überschreiten, und
wobei der Ablauf, der in Bezug auf alle Geräte (1), die Verhältnisse (r) aufweisen, die im unteren Verhältnisbereich (I) umfasst sind, durchgeführt wird, Folgendes umfasst: einen ersten Ablaufschritt der Durchführung mindestes eines des Folgenden: Regeln, Warten und

Reparieren des Geräts (1), einen zweiten Ablaufschritt der Rekalibrierung des Geräts (1), Nachbestimmen des empfohlenen Intervalls (R) und Nachbestimmen des Verhältnisses (r) auf Basis des nachbestimmten empfohlenen Intervalls (R), und einen dritten Ablaufschritt der Bestimmung des aktualisierten Kalibrierzeitintervalls ($A(t_n)$) für das jeweilige Gerät (1) oder ein Austauschgerät (1) zum Austausch des Geräts (1), und

c) Bestimmen des Zeitplans, der geplante Kalibrierzeiten ($t_s$) bereitstellt, zu denen die Geräte (1) erneut kalibriert werden sollen, auf Basis der aktualisierten Kalibrierzeitintervalle ($A(t_n)$), die für jedes der Geräte (1) bestimmt werden, und Durchführen der nächsten Kalibrierungen der Geräte (1) entsprechend den geplanten Kalibrierzeiten ($t_s$).

2. Das Verfahren nach Anspruch 1, wobei: der Ablauf, der in Bezug auf alle Geräte (1) durchgeführt wird, die Verhältnisse (r) aufweisen, die im unteren Verhältnisbereich (I) umfasst sind, des Weiteren mindestens einen der folgenden Ablaufschritte umfasst:

a) Durchführen des ersten, des zweiten und des dritten Ablaufschritts allein in Bezug auf Geräte (1), die ein Verhältnis (r) aufweisen, das einen vorbestimmten Schwellenwert ($r_{min}$) überschreitet, und Austauschgeräte (1), die ein Verhältnis (r) kleiner als diesen Schwellenwert ($r_{min}$) aufweisen,
b) Austauschen des jeweiligen Geräts (1) in dem Fall, in dem das nachbestimmte Verhältnis (r) zu demselben Verhältnisbereich (I) gehört wie das zuvor bestimmte Verhältnis (r),
c) Bestimmen des aktualisierten Kalibrierzeitintervalls $A(t_n)$ für das jeweilige Gerät (1) auf Basis der auf das jeweilige Gerät (1) anwendbaren Regel oder durch Bestimmen eines Produkts des nachbestimmten empfohlenen Intervalls (R) und einer vorbestimmten Konstanten und Bestimmen des aktualisierten Kalibrierzeitintervalls ($A(t_n)$) als gleich eines Intervalls kürzer als das Produkt und länger als ein für das Gerät (1) definiertes minimales Intervall ($CTI_{min}$), und
d) Bestimmen des aktualisierten Kalibrierzeitintervalls $A(t_n)$ für das jeweilige Austauschgerät (1) auf Basis einer Empfehlung eines Herstellers des Austauschgeräts (1).

3. Das Verfahren nach einem der Ansprüche 1 bis 2, wobei:

der Ablauf, der in Bezug auf alle Geräte (1), die Verhältnisse (r) aufweisen, die im Zwischen-Verhältnisbereich (II) umfasst sind, durchgeführt wird, mindestens einen der folgenden Schritte umfasst:

a) Bestimmen des aktualisierten Kalibrierzeitintervalls $A(t_n)$: a1) auf Basis mindestens eines des Folgenden: dem empfohlenen Intervall (R) und dem aktuell angewendeten Kalibrierzeitintervall ($A(t_n)$), a2) als gleich dem aktuell angewendeten Kalibrierzeitintervall ($A(t_{n-1})$), als gleich dem empfohlenen Intervall (R) oder als gleich dem längeren oder kürzeren des angewendeten Kalibrierzeitintervalls ($A(t_{n-1})$) und des empfohlenen Intervalls (R), a3) auf Basis einer Regel, die mindestens eine Anforderung, eine Einschränkung oder einen Umstand berücksichtigt, die an der Betriebsstätte (3) vorherrschen, und/oder a4) auf Basis der auf das jeweilige Gerät (1) anwendbaren Regel, und
b) Durchführen mindestens eines des Folgenden: Warten des Geräts (1), Reinigen des Geräts (1) und Austauschen mindestens eines Teils des Geräts (1), und

der Ablauf, der in Bezug auf alle Geräte (1), die Verhältnisse (r) aufweisen, die im oberen Verhältnisbereich (III) umfasst sind, durchgeführt wird, mindestens einen der Schritte des Bestimmens des aktualisierten Kalibrierzeitintervalls ($A(t_n)$) umfasst: c1) als länger als das aktuell angewendete Kalibrierzeitintervall ($A(t_{n-1})$) und kürzer oder gleich als das für das jeweilige Gerät (1) bestimmte empfohlene Intervall (R), c2) auf Basis einer Regel, die mindestens eine Anforderung, eine Einschränkung oder einen Umstand berücksichtigt, die an der Betriebsstätte (3) vorherrschen, c3) als gleich zu dem längsten oder einem der längsten Intervalle, die in einem vorbestimmten Satz von Intervallen umfasst sind, der eine beschränkte Anzahl an Intervallen verschiedener Längen umfasst, die kürzer oder gleich als das für das jeweilige Gerät (1) bestimmte empfohlene Intervall (R) ist, c4) als kürzer oder gleich zu mindestens einem des Folgenden: einer für das jeweilige Gerät (1) definierten maximal zulässigen Intervalllänge und einer für die Betriebsstätte (3) maximal zulässigen Intervalllänge (3), und/oder c5) auf Basis der für das jeweilige Gerät (1) anwendbaren Regel.

4. Das Verfahren nach einem der Ansprüche 1 bis 3, des Weiteren folgende Schritte umfassend: Wiederholen der Durchführung des Verfahrens für mindestens einen weiteren Kalibrierzyklus, durch:

während jedes Zyklus Durchführen der Verfahrensschritte der Durchführung der Kalibrierungen, des Bestimmens der Verhältnisse (r), des Überprüfens und Aktualisierens der aktuell angewendeten Kalibrierzeitintervalle $(A(t_{n-1}))$ und des Planens und Durchführens der nächsten Kalibrierungen, wobei während jedes Zyklus, der der ersten Durchführung des Verfahrens folgt, die aktuell angewendeten Kalibrierzeitintervalle $(A(t_{n-1}))$ gegeben sind durch die entsprechenden, während des vorherigen Zyklus bestimmten aktualisierten Kalibrierzeitintervalle $(A(t_n))$.

5. Verfahren nach einem der Ansprüche 1 bis 4, wobei:

jedes empfohlene Intervall (R) so bestimmt wird, dass empfohlene Intervalle (R), die bestimmt werden für Geräte (1), die einen höheren Grad der Konformität aufweisen, länger sind als empfohlene Intervalle (R), die für Geräte (1) bestimmt wurden, die einen geringeren Grad der Konformität aufweisen, und umgekehrt, jede Kalibrierung jedes Geräts (1), die nach einem der genannten Zeitpläne geplant wird, mit einer Kalibrierzeit $(t_n)$ durchgeführt wird, die ein Betriebszeitintervall (OTI) beendet, während dessen das jeweilige Gerät (1) an der Betriebsstätte (3) betrieben wird, und/oder jede geplante Kalibrierzeit $(t_s)$, die für eines der Geräte (1) bestimmt wird, einem geplanten Intervall (S) einer durch eine Zeitdifferenz zwischen der jeweiligen geplanten Kalibrierzeit $(t_s)$ und einer Kalibrierzeit $(t_n)$, bei der das jeweilige Gerät (1) oder sein Vorgänger, im Fall, dass das Gerät (1) ausgetauscht wurde, zuletzt vor der geplanten Kalibrierzeit $(t_s)$ kalibriert wurde, gegebenen Länge entspricht.

6. Verfahren nach einem der Ansprüche 1 bis 5, des Weiteren folgende Schritte umfassend: für mindestens eine oder jede Kalibrierung mindestens eines oder aller Geräte (1) der Gruppe Aufzeichnen eines Datensatzes (k), umfassend eine Gerätekennung (d) des jeweiligen Geräts (1) und mindestens zwei oder alles des Folgenden: das empfohlene Intervall (R), das aktuell angewendete Kalibrierzeitintervall $(A(t_{n-1}))$, das aktualisierte Kalibrierzeitintervall $A(tn))$, das geplante Intervall (S) und das Betriebszeitintervall (OTI) nach der jeweiligen Kalibrierung, und Durchführen mindestens eines der folgenden Schritte: Bestimmen mindestens eines Indikators, der die Durchführung des Verfahrens für mindestens einen der Datensätze (k) angibt, oder auf Basis der Intervalle, die in mindestens einem der Datensätze (k) umfasst sind, Aufzeichnen mindestens eines der genannten Indikatoren, Anzeigen mindestens eines der genannten Indikatoren, Überwachen mindestens eines der genannten Indikatoren und Ausgeben einer Benachrichtigung, wenn einer der genannten überwachten Indikatoren einen für den jeweiligen Indikator definierten Schwellenwert überschreitet.

7. Verfahren nach Anspruch 6, wobei die genannten Indikatoren mindestens eines des Folgenden umfassen:

einen ersten Vermögenswert (V1(k)), der die mit Aktualisierungen verbundenen Kosten quantifiziert, wobei das aktuell angewendete Kalibrierzeitintervall $(A(t_{n-1}))$ so verkürzt ist, dass das aktualisierte Kalibrierzeitintervall $(A(t_n))$ kürzer als das empfohlene Intervall (R) ist, einen zweiten Vermögenswert (V2(k)), der ein mit Aktualisierungen verbundenes erhöhtes Risiko quantifiziert, wobei das aktuell angewendete Kalibrierzeitintervall $(A(t_{n-1}))$ so erweitert wird, dass das aktualisierte Kalibrierzeitintervall $(A(t_n))$ länger als das empfohlene Intervall (R) ist, einen dritten Vermögenswert (V3(k)), der ein durch Aktualisierungen genutztes Kostenreduzierungspotential quantifiziert, wobei das aktuell angewendete Kalibrierzeitintervall $(A(t_{n-1}))$ so erweitert wird, dass das aktualisierte Kalibrierzeitintervall $(A(t_n))$ kürzer oder gleich zum empfohlenen Intervall (R) ist, einen vierten Vermögenswert (V4(k)), der ein durch Aktualisierungen genutztes Risikoreduzierungspotential quantifiziert, wobei das aktuell angewendete Kalibrierzeitintervall $(A(t_{n-1}))$ so reduziert wird, dass das aktualisierte Kalibrierzeitintervall $(A(t_n))$ länger oder gleich zum empfohlenen Intervall (R) ist, einen kombinierten Vermögenswert (VC(k)), der gegeben ist durch den einzigen des ersten Vermögenswerts (V1(k)), des zweiten Vermögenswerts (V2(k)), des dritten Vermögenswerts (V3(k)) und des vierten Vermögenswerts (V4(k)), die für den jeweiligen Datensatz (k) definiert sind, mindestens einen geplanten Vermögenswert (VS1(k), VS2(k), VS3(k), VS4(k), VCS(k)), der jeweils auf dieselbe Weise bestimmt wird wie einer des ersten Vermögenswerts (V1(k)), des zweiten Vermögenswerts (V2(k)), des dritten Vermögenswerts (V3(k)), des vierten Vermögenswerts (V4(k)) und des kombinierten Vermögenswerts (VC(k)), indem die aktualisierten Kalibrierzeitintervalle $(A(t_n))$, die bei der jeweiligen Bestimmung angewendet werden, durch das geplante Intervall (S) ausgetauscht werden, mindestens einen implementierten Vermögenswert (VI1(k), VI2(k), VI3(k), VI4(k), VCI(k)), der jeweils auf dieselbe Weise bestimmt wird wie einer des ersten Vermögenswerts (V1(k)), des zweiten Vermögenswerts (V2(k)), des dritten Vermögenswerts (V3(k)), des vierten Vermögenswerts (V4(k)) und des kombinierten Vermögenswerts (VC(k)), indem die aktualisierten Kalibrierzeitintervalle (A($t_n$)), die bei der jeweiligen Bestimmung angewendet werden, durch das Betriebszeitintervall (OTI) ausgetauscht werden,

mindestens einen Kalibrierwert (W(k)), wobei jeder Kalibrierwert (W(k)) auf Basis der in einem der Datensätze (k) umfassten Intervalle auf Basis oder als Differenz oder ein absoluter Wert der Differenz zwischen oder ein Quotient des Betriebszeitintervalls (OTI) und des geplanten Kalibrierzeitintervalls (S), die im jeweiligen Datensatz (k) umfasst sind, bestimmt wird,

mindestens einen Indikatorwert, der auf Basis der in einem der Datensätze (k) umfassten Intervall auf Basis oder als eine Differenz oder ein absoluter Wert der Differenz zwischen oder als Quotient des empfohlenen Intervalls (R) und des aktuell angewendeten Kalibrierzeitintervalls (A($t_{n-1}$)) bestimmt wird,

mindestens einen Indikatorwert, der auf Basis der in einem der Datensätze (k) umfassten Intervalle auf Basis oder als eine Differenz oder ein absoluter Wert der Differenz zwischen oder ein Quotient des empfohlenen Intervalls (R) und des aktualisierten Kalibrierzeitintervalls (A($t_n$)) bestimmt wird,

mindestens einen Indikatorwert, der auf Basis der in einem der Datensätze (k) umfassten Intervalle auf Basis oder als eine Differenz oder ein absoluter Wert der Differenz zwischen oder ein Quotient des aktualisierten Kalibrierzeitintervalls (A($t_n$)) und des geplanten Intervalls (S) bestimmt wird,

mindestens einen Indikatorwert, der auf Basis der in einem der Datensätze (k) umfassten Intervalle auf Basis oder als eine Differenz oder ein absoluter Wert der Differenz zwischen oder ein Quotient des aktualisierten Kalibrierzeitintervalls (A($t_n$)) und des aktuell angewendeten Kalibrierzeitintervalls (A($t_{n-1}$)) bestimmt wird, und mindestens einen anderen Indikator.

8. Verfahren nach einem der Ansprüche 6 bis 7, des Weiteren die folgenden Schritte umfassend:

Definieren mindestens einer Gerätegruppe, wobei die genannten Gerätegruppen mindestens eines des Folgenden umfassen: mindestens eine Gerätegruppe, die jeweils ein einzelnes spezifisches Gerät (1) umfasst, mindestens eine Gerätegruppe, die jeweils Geräte (1) einer gegebenen Klasse oder eines gegebenen Typs umfasst, mindestens eine Gerätegruppe, die jeweils Geräte (1) umfasst, die in einem spezifischen Abschnitt der Betriebsstätte (3) oder in einem Abschnitt betrieben werden, der jedes Mal heruntergefahren werden muss, wenn eines der Geräte (1), die in diesem Abschnitt betrieben werden, kalibriert wird, eine Gerätegruppe, die alle Geräte (1) umfasst, die an der Betriebsstätte (3) betrieben werden, und/oder mindestens eine weitere Gerätegruppe, Bestimmen mindestens eines Gruppenindikators für jede der mindestens einen der Gerätegruppen, wobei jeder Gruppenindikator auf Basis, als ein Durchschnitt oder als ein Durchschnitt der absoluten Werte eines der Indikatoren, die für jeden der für die in der Gerätegruppe umfassten Geräte (1) während einer gegebenen Zeitspanne ($\Delta ti$) aufgezeichneten Datensätze bestimmt wird, und Durchführen mindestens eines der folgenden Schritte: Bestimmen mindestens eines der Gruppenindikatoren für mehrere aufeinanderfolgende gegebene Zeitspannen ($\Delta ti$), Aufzeichnen mindestens eines der genannten Gruppenindikatoren, Anzeigen mindestens eines der genannten Gruppenindikatoren, Überwachen mindestens eines der genannten Gruppenindikatoren und Ausgeben einer Benachrichtigung, wenn einer der genannten überwachten Gruppenindikatoren einen für den jeweiligen Gruppenindikator definierten Schwellenwert überschreitet.

9. Verfahren nach einem der Ansprüche 6 bis 8, des Weiteren den folgenden Schritt umfassend: auf Basis von mindestens einem des Folgenden: der ersten Vermögenswerte (V1(k)), der zweiten Vermögenswerte (V2(k)), der dritten Vermögenswerte (V3(k)), der vierten Vermögenswerte (V4(k)), der kombinierten Vermögenswerte (VC(k)), der geplanten Vermögenswerte (VS(k)), der implementierten Vermögenswerte (VI(k)) und/oder mindestens eines der Gruppenindikatoren ($V_G$), die jeweils bestimmt werden auf Bais von einem aus den ersten Vermögenswerten (V1(k)), den zweiten Vermögenswerten (V2(k)), den dritten Vermögenswerten (V3(k)), den vierten Vermögenswerten (V4(k)), den kombinierten Vermögenswerten (VC(k)), den geplanten Vermögenswerten (VS(k)) oder den implementierten Vermögenswerten (VI(k)), Durchführen mindestens eines aus dem Identifizieren, Quantifizieren, Bereitstellen, Anzeigen und Überwachen mindestens eines des Folgenden: erhöhte Risiken, erhöhte Kosten, genutzte oder nicht genutzte Risikoreduktionspotentiale, die entsprechend den empfohlenen Intervallen (R) verfügbar sind, und genutzte oder nicht genutzte Kostenreduktionspotentiale, die entsprechend den empfohlenen Intervallen (R) verfügbar sind.

10. Verfahren nach Anspruch 9, des Weiteren den folgenden Schritt umfassend: im Fall, dass eines der genannten erhöhten Risiken, erhöhten Kosten, nicht genutzten Kostenreduktionspotentialen und/oder nicht genutzten Risikoreduktionspotentialen einen gegebenen Schwellenwert überschreitet, Bestimmen mindestens einer Grundursache, die ursächlich für das Überschreiten des Schwellenwerts ist, auf Basis der Indikatoren und/oder der Gruppenindikatoren.

**11.** Verfahren nach Anspruch 10, des Weiteren mindestens einen der folgenden Schritte umfassend:

Identifizieren mindestens einer der Regeln und/oder mindestens eines der Ablaufschritte der für die Verhältnisbereiche (I, II, III) vorbestimmten Abläufe als Grundursache, wenn mindestens eines der genannten erhöhten Risiken, erhöhten Kosten, nicht genutzten Kostenreduzierungspotentialen und/oder nicht genutzten Risikoreduzierungspotentialen, die auf Basis der ersten Vermögenswerte (V1(k)), der zweiten Vermögenswerte (V2(k)), der dritten Vermögenswerte (V3(k)), der vierten Vermögenswerte (V4(k)) und/oder mindestens einer der auf Basis der ersten Vermögenswerte (V1(k)), der zweiten Vermögenswerte (V2(k)), der dritten Vermögenswerte (V3(k)) und/oder der vierten Vermögenswerte (V4(k)) bestimmten Gruppenindikatoren quantifiziert werden, den entsprechenden Schwellenwert überschreitet, Identifizieren der Planung als eine Grundursache, wenn die erhöhten Risiken, die erhöhten Kosten, die nicht genutzten Risikoreduzierungspotentiale und/oder die nicht genutzten Kostenreduzierungspotentiale, die auf Basis mindestens eines der geplanten Vermögenswerte (VS1(k), VS2(k), VS3(k), VS4(k)) und/oder mindestens eines der auf Basis der geplanten Vermögenswerte (VS1(k), VS2(k), VS3(k), VS4(k)) bestimmten Gruppenindikatoren quantifiziert werden, den Wert der entsprechenden Eigenschaft, der auf Basis der ersten Vermögenswerte (V1(k)), der zweiten Vermögenswerte (V2(k)), der dritten Vermögenswerte (V3(k)) und/oder der vierten Vermögenswerte (V4(k)) quantifiziert wird, um mehr als einen vordefinierten Schwellenwert überschreiten, und

Identifizieren der Planungstreue der durchgeführten Kalibrierungen im Vergleich zum Zeitplan als eine Grundursache, wenn die erhöhten Risiken, die erhöhten Kosten, die nicht genutzten Risikoreduzierungspotentiale und/oder die nicht genutzten Kostenreduzierungspotentiale, die auf Basis mindestens eines der implementierten Vermögenswerte (VI1(k), VI2(k), VI3(k), VI4(k)) und/oder mindestens eines der auf Basis der implementierten Vermögenswerte (VI1(k), VI2(k), VI3(k), VI4(k)) bestimmten Gruppenindikatoren quantifiziert werden, den Wert der auf Basis der geplanten Vermögenswerte (VS1(k), VS2(k), VS3(k), VS4(k)) quantifizierten entsprechenden Eigenschaft um mehr als einen vordefinierten Schellenwert überschreitet.

**12.** Verfahren nach Anspruch 11, des Weiteren mindestens einen der folgenden Schritte umfassend:

sobald eine Grundursache identifiziert wurde, Ändern des Verfahrens durch Ergreifen einer entsprechenden Gegenmaßnahme, und

Ändern mindestens eines des Folgenden: mindestens einer der Regeln und mindestens eines der Ablaufschritte der für die Verhältnisbereiche (I, II, III) vorbestimmten Abläufe, die oder der als Grundursache identifiziert wurde, der Planung, die als Grundursache identifiziert wurde, und/oder des Kalibrierdurchführungsablaufs, wenn die Planungstreue als Grundursache identifiziert wurde.

**13.** Ein Kalibrieroptimierungssystem (17), das dazu ausgelegt ist, die Verfahrensschritte gemäß einem der Ansprüche 6 bis 12 durchzuführen, wobei
das genannte System (17) Folgendes umfasst:

einen Speicher (15),
eine Schnittstelle (21), die dazu ausgelegt ist, Daten zu empfangen, die vom System (17) benötigt werden, um die Datensätze (k) in dem genannten Speicher (15) zu speichern oder zu bestimmen und zu speichern,
Rechenmittel (19) und ein auf den genannten Rechenmitteln (19) implementiertes Computerprogramm (SW), dass die genannten Rechenmittel (19) dazu veranlasst, die Bestimmung der Indikatoren und/oder der Gruppenindikatoren auf Basis der im Speicher (15) gespeicherten Datensätze (k) durchzuführen, und
wobei das genannte System (17) dazu ausgelegt ist, mindestens eines des Folgenden durchzuführen:

Aufzeichnen mindestens eines der genannten Indikatoren und/oder der genannten Indikatorgruppen,
Bereitstellen mindestens eines der genannten Indikatoren und/oder der genannten Indikatorgruppen über einen Ausgang (25) des Systems (17),
Anzeigen mindestens eines der genannten Indikatoren und/oder der genannten Indikatorgruppen auf einem Display (23), das im genannten System (17) umfasst oder daran angeschlossen ist,
Überwachen mindestens eines der genannten Indikatoren und/oder der genannten Gruppenindikatoren, und
Ausgeben einer Benachrichtigung, wenn einer der überwachten Indikatoren und/oder der genannten überwachten Gruppenindikatoren einen hierfür definierten Schwellenwert überschreitet.

**Revendications**

1. Procédé destiné à faire fonctionner un groupe d'appareils (1) sur un site d'exploitation (3) et à étalonner lesdits appareils (1), procédé pour lequel chaque appareil (1) est un appareil de mesure (1) et les étalonnages desdits appareils (1) sont exécutés sur la base de programmes déterminés en fonction d'intervalles de temps d'étalonnage (A) déterminés pour chacun des appareils (1), lequel procédé comprend les étapes suivantes :

   a) Lors de chaque étalonnage de chaque appareil (1) : détermination d'un degré de conformité de l'appareil (1) respectif à une exigence spécifiée pour cet appareil (1), sur la base dudit degré de conformité, détermination d'un intervalle recommandé (R) pour le prochain étalonnage de l'appareil (1) respectif et détermination d'un rapport (r) entre l'intervalle recommandé (R) et l'intervalle de temps d'étalonnage ($A(t_{n-1})$) actuellement appliqué à cet appareil (1),
   b) Révision des intervalles de temps d'étalonnage (A) sur la base desdits rapports (r) et d'un ensemble prédéterminé de gammes de rapports (I, II, III) par les opérations suivantes : exécution, pour chaque appareil (1), d'une procédure prédéterminée pour la gamme de rapports (I, II, III) comprenant des rapports de la taille du rapport (r) déterminé pour l'appareil (1) respectif ou un appareil de remplacement (1) remplaçant l'appareil (1) et mise à jour de l'intervalle de temps d'étalonnage ($A(t_{n-1})$) actuellement appliqué à l'appareil (1) respectif sur la base d'au moins l'un des éléments suivants : une règle définie pour la gamme de rapports respective (I, II, III) et une règle applicable à l'appareil (1) respectif,
   l'ensemble de plages de rapports (I, II, III) comprenant :

      une gamme de rapports inférieure (I) comprenant des rapports (r) allant de zéro à une limite supérieure (L1) de la gamme inférieure (I) qui est inférieure à 1 ou inférieure ou égale à 0,75, une gamme intermédiaire (II) comprenant des rapports (r) dans lesquels l'intervalle recommandé (R) et l'intervalle de temps d'étalonnage actuellement appliqué ($A(t_{n-1})$) sont du même ordre de grandeur, ou comprenant des rapports (r) allant de la limite supérieure (L1) de la gamme inférieure (I) à une limite supérieure (L2) de la gamme intermédiaire (II) qui est supérieure à 1, inférieure ou égale à 1,25 ou inférieure ou égale à 2, et une gamme de rapports supérieure (III) comprenant des rapports (r) dans lesquels l'intervalle recommandé (R) est supérieur ou nettement supérieur à l'intervalle de temps d'étalonnage ($A(t_{n-1})$) actuellement appliqué, ou comprenant tous les rapports (r) dépassant un seuil donné ou un seuil donné par la limite supérieure (L2) de la gamme de rapports intermédiaire (II), et
      la procédure effectuée pour tous les appareils (1) présentant des rapports (r) compris dans la gamme de rapports inférieure (I) incluant : une première étape de procédure consistant à effectuer au moins l'une des opérations suivantes : réglage, maintenance et réparation de l'appareil (1), une deuxième étape de procédure consistant à réétalonner l'appareil (1), à redéterminer l'intervalle recommandé (R) et à redéterminer le rapport (r) sur la base de l'intervalle recommandé (R) redéterminé, et une troisième étape de procédure consistant à déterminer l'intervalle de temps d'étalonnage mis à jour ($A(t_n)$) pour l'appareil (1) respectif ou un appareil de remplacement (1) remplaçant l'appareil (1), et

   c) Détermination du programme horaire fournissant les heures d'étalonnage programmées ($t_S$) auxquelles les appareils (1) doivent être réétalonnés sur la base des intervalles d'étalonnage mis à jour ($A(t_n)$) déterminés pour chacun des appareils (1) et exécution des prochains étalonnages des appareils (1) conformément aux heures d'étalonnage programmées ($t_S$).

2. Procédé selon la revendication 1, pour lequel :
   la procédure effectuée pour tous les appareils (1) présentant des rapports (r) compris dans la gamme de rapports inférieure (I) comprend en outre au moins l'une des étapes de procédure suivantes :

   a) Exécution de la première, la deuxième et la troisième étape de la procédure uniquement pour les appareils (1) présentant un rapport (r) supérieur à un seuil prédéfini ($r_{min}$) et remplacement des appareils (1) présentant un rapport (r) inférieur à ce seuil ($r_{min}$),
   b) Remplacement de l'appareil (1) respectif dans le cas où le rapport redéfini (r) appartient à la même gamme de rapports (I) que le rapport précédemment défini (r),
   c) Détermination de l'intervalle de temps d'étalonnage mis à jour $A(t_n)$ pour l'appareil (1) respectif sur la base de la règle applicable à l'appareil (1) respectif ou en déterminant un produit de l'intervalle recommandé redéfini (R) et d'une constante prédéfinie et détermination de l'intervalle de temps d'étalonnage mis à jour ($A(t_n)$) comme étant égal à un intervalle plus court que le produit et plus long qu'un intervalle minimum ($CTI_{min}$) défini pour l'appareil (1), et

d) Détermination de l'intervalle de temps d'étalonnage mis à jour $A(t_n)$ pour l'appareil de remplacement (1) respectif sur la base d'une recommandation d'un fabricant de l'appareil de remplacement (1).

**3.** Procédé selon l'une des revendications 1 à 2, pour lequel :

la procédure effectuée pour tous les appareils (1) présentant des rapports (r) compris dans la gamme de rapports intermédiaires (II) comprend au moins l'une des étapes suivantes :

a) Détermination de l'intervalle de temps d'étalonnage mis à jour $A(t_n)$ : a1) sur la base d'au moins l'un des éléments suivants : l'intervalle recommandé (R) et l'intervalle de temps d'étalonnage $(A(t_n))$ actuellement appliqué, a2) comme étant égal à l'intervalle de temps d'étalonnage $(A(t_{n-1}))$ actuellement appliqué, comme étant égal à l'intervalle recommandé (R) ou comme étant égal au plus long ou au plus court de l'intervalle de temps d'étalonnage $(A(t_{n-1}))$ actuellement appliqué et de l'intervalle recommandé (R), a3) sur la base d'une règle tenant compte d'au moins une exigence, restriction ou circonstance prévalant sur le site d'exploitation (3), et/ou a4) sur la base de la règle applicable à l'appareil (1) respectif, et
b) Exécution d'au moins l'une des opérations suivantes : maintenance de l'appareil (1), nettoyage de l'appareil (1) et remplacement d'au moins une partie de l'appareil (1), et

la procédure effectuée pour tous les appareils (1) présentant des rapports (r) compris dans la gamme de rapports supérieure (III) incluant au moins l'une des étapes suivantes : détermination de l'intervalle de temps d'étalonnage mis à jour $(A(t_n))$ : c1) comme étant plus long que l'intervalle de temps d'étalonnage $(A(t_{n-1}))$ actuellement appliqué et plus court ou égal à l'intervalle recommandé (R) déterminé pour l'appareil (1) respectif, c2) sur la base d'une règle tenant compte d'au moins une exigence, restriction ou circonstance prévalant sur le site d'exploitation (3), c3) comme étant égal à l'intervalle le plus long ou à l'un des intervalles les plus longs compris dans un ensemble prédéfini d'intervalles comprenant un nombre limité d'intervalles de différentes longueurs qui est inférieur ou égal à l'intervalle recommandé (R) déterminé pour l'appareil (1) respectif, c4) comme étant plus court ou égal à au moins l'un des éléments suivants : une durée d'intervalle maximale admissible définie pour l'appareil (1) respectif et une durée d'intervalle maximale admissible définie pour le site d'exploitation (3), et/ou c5) sur la base de la règle applicable à l'appareil (1) respectif.

**4.** Procédé selon l'une des revendications 1 à 3, comprenant en outre l'étape suivante :
Répétition de l'exécution du procédé pendant au moins un cycle d'étalonnage supplémentaire, par les opérations suivantes :

Au cours de chaque cycle, exécution des étapes du procédé consistant à effectuer les étalonnages, détermination des rapports (r), examen et mise à jour des intervalles de temps d'étalonnage $(A(t_{n-1}))$ actuellement appliqués et planification et exécution des étalonnages suivants,
procédé pour lequel, au cours de chaque cycle suivant la première exécution du procédé, les intervalles de temps d'étalonnage $(A(t_{n-1}))$ actuellement appliqués sont donnés par les intervalles de temps d'étalonnage mis à jour $(A(t_n))$ correspondants, lesquels intervalles ont été déterminés au cours du cycle précédent.

**5.** Procédé selon l'une des revendications 1 à 4, pour lequel :

chaque intervalle recommandé (R) est déterminé de telle sorte que les intervalles recommandés (R) déterminés pour les appareils (1) présentant un degré de conformité plus élevé soient plus longs que les intervalles recommandés (R) déterminés pour les appareils (1) présentant un degré de conformité plus faible, et inversement,
chaque étalonnage de chaque appareil (1) programmé selon l'un desdits programmes est effectué à un moment d'étalonnage $(t_n)$ mettant fin à un intervalle de temps de fonctionnement (OTI) pendant lequel l'appareil (1) respectif a été utilisé sur le site d'exploitation (3), et/ou
chaque moment d'étalonnage programmé $(t_S)$ déterminé pour l'un des appareils (1) correspond à un intervalle programmé (S) d'une durée donnée par une différence de temps entre le moment d'étalonnage programmé $(t_S)$ respectif et un moment d'étalonnage $(t_n)$ auquel l'appareil (1) respectif ou son prédécesseur dans le cas où l'appareil (1) a été remplacé a été étalonné pour la dernière fois avant le moment d'étalonnage programmé $(t_S)$.

**6.** Procédé selon l'une des revendications 1 à 5, comprenant en outre les étapes suivantes :

Enregistrement - pour au moins un ou chaque étalonnage d'au moins un ou de tous les appareils (1) du groupe - d'un ensemble de données (k) comprenant une identification (d) de l'appareil (1) respectif et au moins deux ou tous les éléments suivants : l'intervalle recommandé (R), l'intervalle de temps d'étalonnage (A($t_{n-1}$)) actuellement appliqué, l'intervalle de temps d'étalonnage mis à jour (A($t_n$)), l'intervalle programmé (S) et l'intervalle de temps de fonctionnement (OTI) suivant l'étalonnage respectif, et

Exécution d'au moins l'une des étapes suivantes : détermination d'au moins un indicateur représentatif de la performance du procédé pour au moins l'un des ensembles de données (k) ou sur la base des intervalles compris dans au moins l'un des ensembles de données (k), enregistrement d'au moins un desdits indicateurs, affichage d'au moins un desdits indicateurs, surveillance d'au moins un desdits indicateurs et émission d'une notification lorsque l'un desdits indicateurs surveillés dépasse un seuil défini pour l'indicateur respectif.

7. Procédé selon la revendication 6, pour lequel lesdits indicateurs comprennent au moins l'un des éléments suivants :

une première valeur d'actif (V1(k)) quantifiant une augmentation du coût associé aux mises à jour, l'intervalle de temps d'étalonnage (A($t_{n-1}$)) actuellement appliqué étant raccourci de telle sorte que l'intervalle de temps d'étalonnage mis à jour (A($t_n$)) soit plus court que l'intervalle recommandé (R),

une deuxième valeur d'actif (V2(k)) quantifiant un risque accru associé aux mises à jour, l'intervalle de temps d'étalonnage (A($t_{n-1}$)) actuellement appliqué étant prolongé de telle sorte que l'intervalle de temps d'étalonnage mis à jour (A($t_n$)) est plus long que l'intervalle recommandé (R),

une troisième valeur d'actif (V3(k)) quantifiant un potentiel de réduction des coûts utilisé par les mises à jour, l'intervalle de temps d'étalonnage (A($t_{n-1}$)) actuellement appliqué étant prolongé de telle sorte que l'intervalle de temps d'étalonnage mis à jour (A($t_n$)) soit plus court ou égal à l'intervalle recommandé (R),

une quatrième valeur d'actif (V4(k)) quantifiant un potentiel de réduction des risques utilisé par les mises à jour, l'intervalle de temps d'étalonnage (A($t_{n-1}$)) actuellement appliqué étant réduit de telle sorte que l'intervalle de temps d'étalonnage mis à jour (A($t_n$)) soit plus long ou égal à l'intervalle recommandé (R),

une valeur d'actif combinée (VC(k)) donnée par seulement l'une parmi la première valeur d'actif (V1(k)), la deuxième valeur d'actif (V2(k)), la troisième valeur d'actif (V3(k)) et la quatrième valeur d'actif (V4(k)) définie pour l'ensemble de données respectif (k),

au moins une valeur d'actif programmée (VS1(k), VS2(k), VS3(k), VS4(k), VCS(k)), chacune déterminée de la même manière que l'une des valeurs d'actif suivantes : la première valeur d'actif (V1(k)), la deuxième valeur d'actif (V2(k)), la troisième valeur d'actif (V3(k)), la quatrième valeur d'actif (V4(k)) et la valeur d'actif combinée (VC(k)), en remplaçant les intervalles de temps d'étalonnage mis à jour (A($t_n$)) appliqués dans la détermination respective par l'intervalle programmé (S),

au moins une valeur d'actif mise en œuvre (VI1(k), VI2(k), VI3(k), VI4(k), VCI(k)), chacune déterminée chacune de la même manière que l'une des valeurs d'actif suivantes : la première valeur d'actif (V1(k)), la deuxième valeur d'actif (V2(k)), la troisième valeur d'actif (V3(k)), la quatrième valeur d'actif (V4(k)) et la valeur d'actif combinée (VC(k)), en remplaçant les intervalles de temps d'étalonnage mis à jour (A($t_n$)) appliqués dans la détermination respective par l'intervalle de temps de fonctionnement (OTI),

au moins une valeur d'étalonnage (W(k)), chaque valeur d'étalonnage (W(k)) étant déterminée sur la base des intervalles compris dans l'un des ensembles de données (k) sur la base ou en tant que différence ou valeur absolue de la différence entre ou un quotient de l'intervalle de temps de fonctionnement (OTI) et l'intervalle de temps d'étalonnage programmé (S) compris dans l'ensemble de données respectif (k),

au moins une valeur d'indicateur déterminée sur la base des intervalles compris dans l'un des ensembles de données (k) sur la base ou en tant que différence ou valeur absolue de la différence entre ou un quotient de l'intervalle recommandé (R) et l'intervalle de temps d'étalonnage (A($t_{n-1}$)) actuellement appliqué, au moins une valeur d'indicateur déterminée sur la base des intervalles compris dans l'un des ensembles de données (k) sur la base ou en tant que différence ou valeur absolue de la différence entre ou un quotient de l'intervalle recommandé (R) et l'intervalle de temps d'étalonnage mis à jour (A($t_n$)),

au moins une valeur d'indicateur déterminée sur la base des intervalles compris dans l'un des ensembles de données (k) sur la base ou en tant que différence ou valeur absolue de la différence entre ou un quotient de l'intervalle de temps d'étalonnage mis à jour (A($t_n$)) et l'intervalle programmé (S),

au moins une valeur d'indicateur déterminée sur la base des intervalles compris dans l'un des ensembles de données (k) sur la base ou en tant que différence ou valeur absolue de la différence entre ou un quotient de l'intervalle de temps d'étalonnage mis à jour (A($t_n$)) et l'intervalle de temps d'étalonnage (A($t_{n-1}$)) actuellement appliqué et

au moins un autre indicateur.

8. Procédé selon l'une des revendications 6 à 7, comprenant en outre les étapes suivantes :

Définition d'au moins un groupe d'appareils, lesdits groupes d'appareils comprenant au moins l'un des éléments suivants : au moins un groupe d'appareils comprenant chacun un seul appareil spécifique (1), au moins un groupe d'appareils comprenant chacun des appareils (1) d'une classe ou d'un type donné, au moins un groupe d'appareils comprenant chacun des appareils (1) fonctionnant sur une section spécifique du site d'exploitation (3) ou sur une section qui doit être arrêtée chaque fois qu'un des appareils (1) fonctionnant sur cette section est étalonné, un groupe d'appareils comprenant tous les appareils (1) fonctionnant sur le site d'exploitation (3) et/ou au moins un autre groupe d'appareils,

Détermination d'au moins un indicateur de groupe pour chacun d'au moins un des groupes d'appareils, chaque indicateur de groupe étant déterminé sur la base, en tant que moyenne ou moyenne des valeurs absolues, de l'un des indicateurs déterminés pour chacun des ensembles de données (k) enregistrés pour les appareils (1) compris dans le groupe d'appareils pendant une période de temps donnée (Δti), et

Exécution d'au moins l'une des étapes suivantes : détermination d'au moins l'un des indicateurs de groupe pour plusieurs périodes de temps données consécutives (Δti), enregistrement d'au moins l'un desdits indicateurs de groupe, affichage d'au moins l'un desdits indicateurs de groupe, surveillance d'au moins l'un desdits indicateurs de groupe et émission d'une notification lorsque l'un desdits indicateurs de groupe surveillés dépasse un seuil défini pour l'indicateur de groupe respectif.

9. Procédé selon l'une des revendications 6 à 8, comprenant en outre l'étape suivante :

Sur la base d'au moins l'un des éléments suivants : les premières valeurs d'actif (V1(k)), les deuxièmes valeurs d'actif (V2(k)), les troisièmes valeurs d'actif (V3(k)), les quatrièmes valeurs d'actif (V4(k)), les valeurs d'actif combinées (VC(k)), les valeurs d'actif programmées (VS(k)), les valeurs d'actifs mises en œuvre (VI(k)) et/ou au moins un des indicateurs de groupe ($V_G$), chacun étant déterminé sur la base de l'une des premières valeurs d'actifs (V1(k)), des deuxièmes valeurs d'actifs (V2(k)), des troisièmes valeurs d'actifs (V3(k)), des quatrièmes valeurs d'actifs (V4(k)), les valeurs d'actif combinées (VC(k)), les valeurs d'actif programmées (VS(k)) ou les valeurs d'actif mises en œuvre (VI(k)), exécution d'au moins l'une des opérations suivantes : identification, quantification, mise à disposition, affichage et surveillance d'au moins l'un des éléments suivants :

les risques accrus, les coûts accrus, les potentiels de réduction des risques utilisés ou inutilisés disponibles selon les intervalles recommandés (R) et les potentiels de réduction des coûts utilisés ou inutilisés disponibles selon les intervalles recommandés (R).

10. Procédé selon la revendication 9, comprenant en outre l'étape suivante :

dans le cas où l'un desdits risques accrus, coûts accrus, potentiels de réduction des coûts inutilisés et/ou potentiels de réduction des risques inutilisés dépasse un seuil donné, détermination d'au moins une cause principale à l'origine du dépassement du seuil sur la base des indicateurs et/ou des indicateurs de groupe.

11. Procédé selon la revendication 10, comprenant en outre au moins l'une des étapes suivantes :

Identification d'au moins l'une des règles et/ou au moins l'une des étapes des procédures prédéterminées pour les gammes de ratios (I, II III) comme cause principale lorsqu'au moins l'un desdits risques accrus, coûts accrus, potentiels de réduction des coûts inutilisés et/ou potentiels de réduction des risques inutilisés quantifiés sur la base des premières valeurs d'actif (V1(k)), des deuxièmes valeurs d'actif (V2(k)), des troisièmes valeurs d'actif (V3(k)), des quatrièmes valeurs d'actif (V4(k)) et/ou au moins un des indicateurs de groupe déterminés sur la base des premières valeurs d'actif (V1(k)), des deuxièmes valeurs d'actif (V2(k)), des troisièmes valeurs d'actif (V3(k)) et/ou des quatrièmes valeurs d'actif (V4(k)) dépassent le seuil correspondant,

Identification de la programmation comme cause principale lorsque les risques accrus, les coûts accrus, les potentiels de réduction des risques inutilisés et/ou les potentiels de réduction des coûts inutilisés quantifiés sur la base d'au moins une des valeurs d'actif programmées (VS1(k), VS2(k), VS3(k), VS4(k)) et/ou au moins un des indicateurs de groupe déterminés sur la base des valeurs d'actif programmées (VS1(k), VS2(k), VS3(k), VS4(k)) dépasse la valeur de la propriété correspondante quantifiée sur la base des premières valeurs d'actif (V1(k)), des deuxièmes valeurs d'actif (V2(k)), des troisièmes valeurs d'actif (V3(k)) et/ou des quatrièmes valeurs d'actif (V4(k)) de plus d'un seuil prédéfini, et

Identification du respect du programme des étalonnages effectués comme cause principale lorsque les risques accrus, les coûts accrus, les potentiels de réduction des risques inutilisés et/ou les potentiels de réduction des coûts inutilisés quantifiés sur la base d'au moins une des valeurs d'actif mises en oeuvre (VI1(k), VI2(k), VI3(k), VI4(k)) et/ou d'au moins un des indicateurs de groupe déterminés sur la base des valeurs d'actif mises en œuvre (VI1(k), VI2(k), VI3(k), VI4(k)) dépasse la valeur de la propriété correspondante quantifiée sur la base des valeurs d'actif programmées (VS1(k), VS2(k), VS3(k), VS4(k)) de plus d'un seuil prédéfini.

**12.** Procédé selon la revendication 11, comprenant en outre l'une des étapes suivantes :

Une fois la cause principale identifiée, modification du procédé en prenant une contre-mesure correspondante, et
Modification d'au moins l'un des éléments suivants : au moins l'une des règles et au moins l'une des étapes de procédure parmi les procédures prédéterminées pour les gammes de ratios (I, II, III) qui ont été identifiées comme cause principale, la programmation identifiée comme cause principale et/ou la procédure de performance d'étalonnage lorsque le respect du programme a été identifié comme cause principale.

**13.** Système d'optimisation d'étalonnage (17) conçu pour exécuter les étapes de procédé de l'une quelconque des revendications 6 à 12,
ledit système (17) comprenant :

une mémoire (15),
une interface (21) conçue pour recevoir les données requises par le système (17) afin de stocker ou de déterminer et de stocker les ensembles de données (k) dans ladite mémoire (15),
des moyens de calcul (19) et un programme informatique (SW) mis en œuvre sur lesdits moyens de calcul (19) et amenant lesdits moyens de calcul (19) à effectuer la détermination des indicateurs et/ou des indicateurs de groupe sur la base des ensembles de données (k) stockés dans la mémoire (15), et
ledit système (17) étant conçu pour exécuter au moins l'une des opérations suivantes :

Enregistrement d'au moins l'un desdits indicateurs et/ou desdits indicateurs de groupe,
Mise à disposition d'au moins l'un desdits indicateurs et/ou desdits indicateurs de groupe via une sortie (25) du système (17),
Affichage d'au moins l'un desdits indicateurs et/ou desdits indicateurs de groupe sur un écran (23) compris dans ou connecté audit système (17),
Surveillance d'au moins l'un desdits indicateurs et/ou desdits indicateurs de groupe, et
Émission d'une notification lorsque l'un des indicateurs surveillés et/ou l'un desdits indicateurs de groupe surveillés dépasse un seuil défini pour ledit indicateur.

3

5
L

pH/C

9

P

F
7

**Fig. 1**

1

3

13

d    A(t$_{n-1}$)    R    A(t$_n$)    S    OTI

17

21

25

15

19

SW

23

**Fig. 2**

Fig. 3

Fig. 4

Fig. 5

Fig. 6

0     $A(t_{n-1})$     $T = A(t_n)$

$R > A(t_{n-1})$

$R$

$V1(k) := 1 - A(t_{n-1})/A(t_n)$

$V3(k) := \dfrac{A(t_n) - A(t_{n-1})}{R - A(t_{n-1})}$

$V2(k) := A(t_n)/R - 1$

$R < A(t_{n-1})$

$R$

$V1(k) := R/A(t_n) - 1$

$V4(k) := \dfrac{A(t_{n-1}) - A(t_n)}{A(t_{n-1}) - R}$

$V2(k) := A(t_n)/A(t_{n-1}) - 1$

$R = A(t_{n-1})$

$R$

$V1(k) := 1 - A(t_{n-1})/A(t_n)$

[100%]

$V2(k) := A(t_n)/A(t_{n-1}) - 1$

EP 4 078 484 B1

VC(k)

VC(k(t1)):=V1(k(t1)

100%

VC(k(t2)):=V3(k(t2))

t3          t4

0%                                                                    t

t1        t2

VC(k(t3)):=V4(k(t3))

-100%

VC(k(t4)):=V2(k(t4)

Fig. 7

$V_G(k)$

100%

0%                                                                    t

Δt1     Δt2     Δt3     Δt4

-100%

Fig. 10

0       $A(t_{n-1})$       T=S

**R > $A(t_{n-1})$**

R

$VS1(k) := 1 - A(t_{n-1})/S$

$VS3(k) := \dfrac{S - A(t_{n-1})}{R - A(t_{n-1})}$

$VS2(k) := S/R - 1$

**R < $A(t_{n-1})$**

R

$VS1(k) := R/S - 1$

$VS4(k) := \dfrac{A(t_{n-1}) - S}{A(t_{n-1}) - R}$

$VS2(k) := S/A(t_{n-1}) - 1$

**R = $A(t_{n-1})$**

R

$VS1(k) := 1 - A(t_{n-1})/S$

[100%]

$VS2(k) := S/A(t_{n-1}) - 1$

Fig. 8

EP 4 078 484 B1

Fig. 9

EP 4 078 484 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2602680 B1

**Non-patent literature cited in the description**

- **DAVID DEAVER**. Calibration Intervals, A Manufacturer's Perspective. Fluke Corporation, 11 December 2012